# FASCICULE DE BREVET EUROPEEN

(11) **EP 3 392 453 B1**
(45) Date de publication et mention de la délivrance du brevet: **29.07.2020**
(21) Numéro de dépôt: 18164459.2
(22) Date de dépôt: 28.03.2018
(51) Int. Cl.: E21B 41/00, E21B 43/01

(54) **PROCÉDÉ DE MISE EN SÉCURITÉ D'UNE CONDUITE SOUS-MARINE DE LIAISON FOND-SURFACE DE PRODUCTION LORS DU REDÉMARRAGE DE LA PRODUCTION**
SICHERUNGSVERFAHREN EINER UNTERWASSERLEITUNG ZUR VERBINDUNG VON MEEERESBODEN UND PRODUKTIONSOBERFLÄCHE BEI DER WIEDERAUFNAHME DER PRODUKTION
A METHOD OF MAKING SAFE AN UNDERSEA BOTTOM-TO-SURFACE PRODUCTION PIPE WHEN RESTARTING PRODUCTION

(30) Priorité: 18.04.2017 FR 1753326
(43) Date de publication de la demande: 24.10.2018
(73) Titulaire: SAIPEM S.A., 78180 Montigny Le Bretonneux (FR)
(72) Inventeur: ABRAND, Stéphanie, 78640 VILLIERS SAINT FREDERIC (FR); ANRES, Stéphane, 78210 SAINT CYR L'ECOLE (FR); MACAULEY, Lionel, 75015 PARIS (FR)
(74) Mandataire: Cabinet Beau de Loménie

(56) Documents cités:
- US-A1- 2002 044 838
- US-A1- 2008 093 081
- P. Ramulu Rathod ET AL: "Flow assurance strategies in indian depepwaters: issues and means of mitigation", , 26 novembre 2015 (2015-11-26), pages 1-15, XP055430902, Extrait de l'Internet: URL:https://www.onepetro.org/conference-pa per/SPE-178058-MS?sort=&start=0&q=178058&f rom_year=&peer_reviewed=&published_between =&fromSearchResults=true&to_year=&rows=10# [extrait le 2017-11-30]
- GERARD SCHREURS ET AL: "Development Of Gel Systems For Pipeline Dewatering And Drying Applications", SPE, 2 mai 1994 (1994-05-02), pages 2-5, XP055430899, DOI: 10.4043/7577-MS
- RON D. NELSON ET AL: "A Novel Gas-Hydrate Inhibitor for Deepwater Frac-Pack and Subsea Environments", SPE INTERNATIONAL SYMPOSIUM ON FORMATION DAMAGE CONTROL, 1 janvier 2000 (2000-01-01), pages 23-24, XP055430901, DOI: 10.2118/58764-MS

## Description

### Arrière-plan de l'invention

La présente invention se rapporte au domaine général des conduites de transport de fluides pour le transfert d'hydrocarbures, notamment du pétrole brut contenant majoritairement une phase huileuse d'hydrocarbures, de l'eau et du gaz, issus de puits de production sous-marins, ci-après dénommé fluide de production.

Elle concerne plus précisément un procédé de gestion de l'arrêt et redémarrage de la production d'une conduite sous-marine de liaison fond-surface reliant le fond de la mer à des supports flottant en surface.

Cette invention s'applique plus particulièrement aux développements de champs pétroliers en mer profonde, c'est à dire des installations pétrolières installées en pleine mer, dans lesquelles les équipements de surface sont en général situés sur des structures flottantes, les têtes de puits étant au fond de la mer. Les conduites concernées par la présente invention comprenant plus particulièrement les risers appelés conduites de liaison fond-surface remontant vers la surface, mais aussi les conduites reposant au fond de la mer reliant les têtes de puits auxdits risers.

L'application principale de l'invention concerne les conduites ou canalisations immergées, sous-marines ou subaquatiques, et plus particulièrement à grande profondeur, au-delà de 300 mètres, et véhiculant des produits pétroliers chauds dont un trop grand refroidissement serait problématique en cas d'arrêt de production. Les développements en mer profonde sont effectués par des profondeurs d'eau atteignant actuellement 1500 m. Les développements futurs sont envisagés par des profondeurs d'eau jusqu'à 3000-4000 m et au-delà.

Il est connu de l'homme de l'art que pour les grandes profondeurs, l'injection en pied de colonne montante de gaz déshydraté (en anglais « gas lift ») est utilisé pour diminuer la pression due à la colonne hydrostatique, et donc améliorer la productivité des puits de production.

Dans ce type d'applications, de nombreux problèmes se posent notamment en cas d'arrêt de production lorsque la température des produits pétroliers diminue d'une valeur significative importante par rapport à leur température de production qui est souvent au-delà de 60 à 80°C alors que la température de l'eau environnante surtout à grande profondeur peut être largement inférieure à 10°C et atteindre 4°C. Si les produits pétroliers se refroidissent par exemple en dessous de 30° à 60°C pour une température initiale de 70 à 80°C on observe en général :
- une forte augmentation de la viscosité qui diminue alors le débit de la conduite,
- une précipitation de paraffine dissoute qui augmente alors la viscosité du produit et dont le dépôt peut diminuer le diamètre intérieur utile de la conduite,
- la floculation des asphaltènes induisant les mêmes problèmes,
- la formation soudaine, compacte et massive d'hydrates de gaz qui précipitent à forte pression et faible température, obstruant ainsi brusquement la conduite en formant des bouchons.

Paraffines et asphaltènes restent accrochés à la paroi et nécessitent alors un nettoyage par raclage de l'intérieur de la conduite ; en revanche, les hydrates sont encore plus difficiles, voire parfois impossibles à résorber.

De plus, dans les colonnes montantes, le gaz mélangé au pétrole brut et à l'eau a tendance à se détendre au fur et à mesure de sa remontée, car la pression hydrostatique baisse. Cette détente étant quasi-adiabatique, les calories sont prélevées sur le fluide polyphasique même, et il en résulte un abaissement significatif de la température interne, ce dernier pouvant atteindre 8 à 15°C sur une dénivellation de 1500m ce qui peut générer la formation de bouchons d'hydrates.

L'isolation thermique et le réchauffage de telles conduites permet de retarder le refroidissement des effluents pétroliers véhiculés non seulement en régime de production établi, pour que leur température soit par exemple d'au moins 40°C en arrivant en surface, pour une température de production à l'entrée de la conduite de 70°C à 80°C, mais également en cas de diminution ou même d'arrêt de la production, afin d'éviter que la température des effluents ne descende par exemple en dessous de 30°C, afin de limiter les problèmes ci-dessus, ou tout au moins, de permettre de les rendre réversibles.

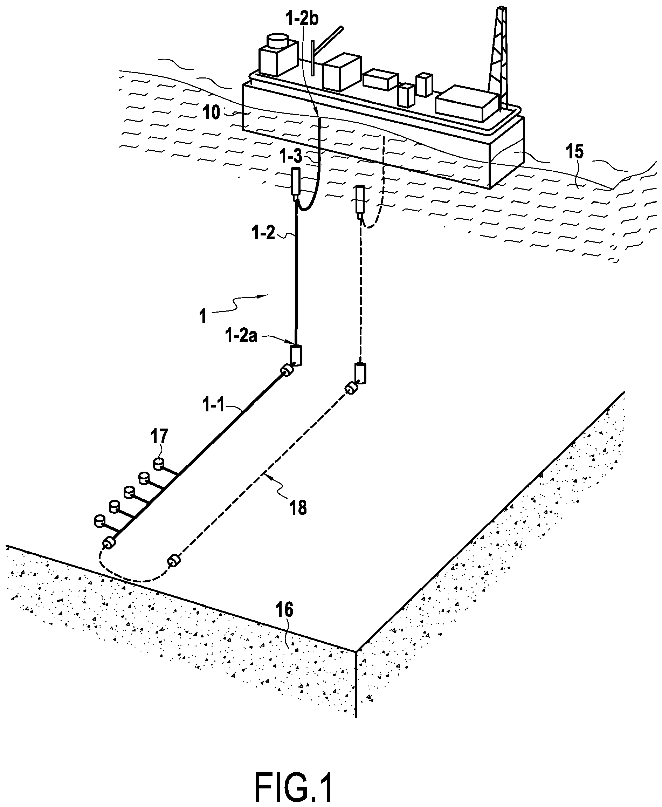

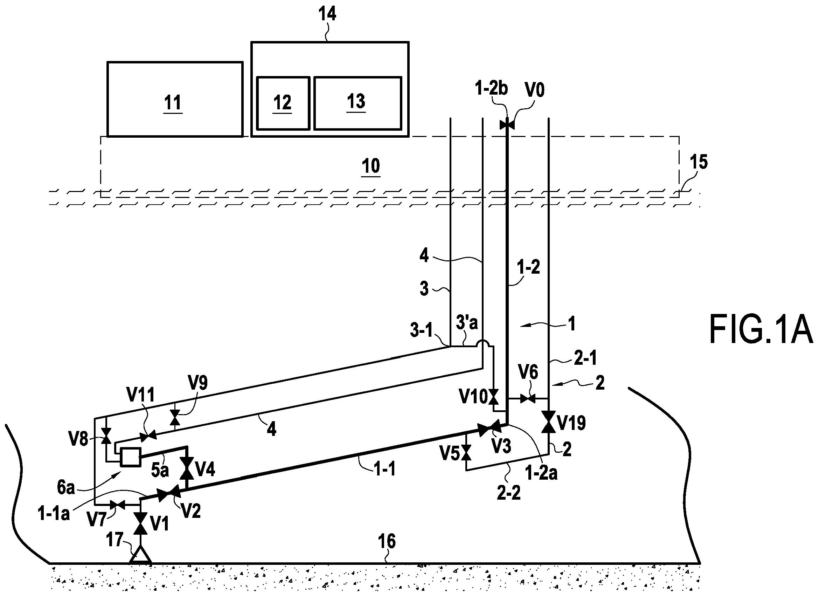

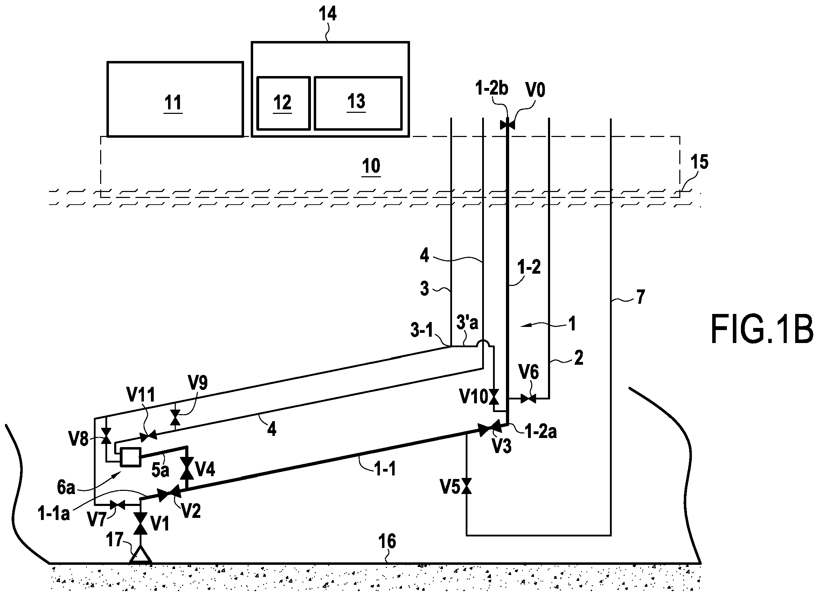

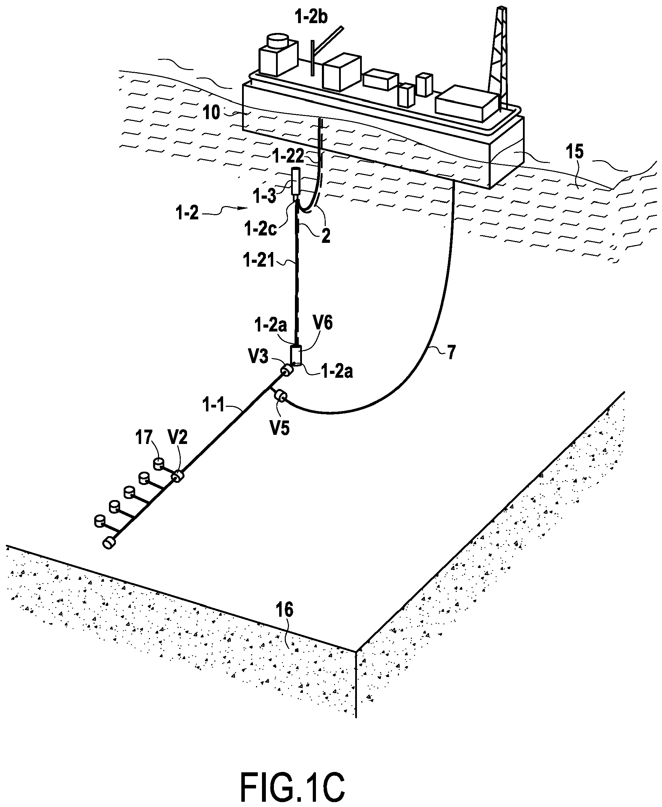

Il est connu de chauffer les conduites à double enveloppe sur toute leur longueur grâce à une pluralité de câbles électriques qui sont enroulés autour de la surface externe de l'enveloppe interne des conduites pour la chauffer par effet Joule. Cette solution de chauffage, qui est appelée « chauffage tracé » (ou « heat tracing » en anglais), permet de maintenir les fluides d'hydrocarbures transportés dans les conduites sous-marines à une température supérieure à un seuil critique sur tout leur trajet depuis le puits de production jusqu'à l'installation de surface, et ainsi d'éviter la formation de cristaux d'hydrates ou autres dépôts solides conduisant à la création de bouchons capables de bloquer la conduite sous-marine. En particulier, ce chauffage tracé permet le maintien en température du fluide de production au-dessus de ce seuil critique lors des phases d'arrêt, permettant ainsi une préservation quasi immédiate après son activation. Ce procédé est illustré sur la figure 1.

En cas d'arrêt de plusieurs jours ou de plusieurs semaines, au moment de l'arrêt les conditions de pression élevée et de température baissant, il y a un risque de provoquer la formation de bouchon d'hydrate. Pour cette raison, la méthode de préservation standard est de dépressuriser la conduite en premier lieu. Cette mesure n'étant pas suffisante pour préserver la conduite en grande profondeur, après fermeture de la vanne de tête de puits en amont de la conduite et dépressurisation de celle-ci par ouverture de la vanne au sommet du riser en surface, une circulation en boucle d'un produit inerte de substitution, par exemple du diesel ou du pétrole brut dégazé (« dead crude oil ») est initiée. On entend ici par « inerte » que le fluide ne réagit pas pour former des cristaux d'hydrates.

Ce procédé dit de boucle conventionnelle ou hybride est illustré sur la figure 1. Ce procédé permet de laisser la conduite descendre en température jusqu'à 4°C sans formation de bouchons d'hydrate. Et, lors du redémarrage, on utilise en général le même gazole pour effectuer le réchauffage de la conduite en le faisant circuler en boucle à partir du support flottant où on le réchauffe en le faisant passer dans des chaudières ou des échangeurs de chaleur, en récupérant des calories en provenance des turbines à gaz. Ce n'est qu'après cette phase de réchauffage avec circulation de diesel, que l'on peut rouvrir les vannes de têtes de puits et reprendre la production.

En effet, si un redémarrage prématuré de la production était opéré avant réchauffage suffisant et préalable de la ligne, au cours de la progression du pétrole brut vers le FPSO et après un parcours de quelques kilomètres, voire de quelques centaines de mètres seulement, le pétrole, même en sortant du puits à une température élevée, par exemple 75°C, verrait sa température descendre à la valeur critique à laquelle des phénomènes redoutés de formation de bouchons d'hydrates ou de paraffine peuvent se produire, ce qui résulterait en un blocage du flux de pétrole brut.

Dans US 2002/044838, US 2008/093081 et WO 2009/042307, un procédé est décrit dans lequel après la dépressurisation de la conduite suivant un cas d'arrêt de production, on remplace le fluide qu'elle contient par un fluide inerte de remplacement. Et, pour le remplacement du fluide de production présent dans la conduite au moment de l'arrêt, on met en œuvre un racleur mécanique, préalablement stocké proche de l'entrée de la conduite, en combinaison avec un produit inhibant la formation de bouchon ou ne pouvant pas former d'hydrates ci-après dénommé produit inhibiteur de formation d'hydrate, tel que du méthanol, glycol ou mono éthylène glycol (MEG en abrégé) et un fluide de déplacement injecté dans la conduite, en amont de celle-ci au fond de la mer, pour déplacer et faire progresser le produit inhibiteur et le racleur mécanique en les poussant dans la conduite vers la surface. Le fluide de déplacement est du gasoil ou du pétrole brut dégazé combiné à un produit inhibiteur d'hydrates et fait office de fluide de remplacement dans la conduite. La ligne d'injection d'eau permet de remplacer le racleur sur le site de stockage afin d'assurer la préservation suivante. Du fait que le fluide de remplacement ne contient ni gaz ni eau et/ou contient un produit inhibiteur de formation d'hydrates, au redémarrage il n'y a pas de risque de formation d'hydrate.

L'inconvénient du procédé décrit dans WO2009/042307 comme les procédés dits à boucle, est qu'ils requièrent une quantité importante de fluide de remplacement pour remplir toute la conduite d'une part et d'autre part, l'envoi depuis la surface d'un racleur mécanique.

Or, dans le cas de conduite sous-marine de production de grande longueur (plusieurs kilomètres) avec une partie de conduite reposant au fond de la mer s'étendant depuis une tête de puits au fond de la mer et l'extrémité inférieure d'une conduite sous forme de colonne montante ou riser, le procédé peut devenir onéreux et long à mettre en œuvre.

Par ailleurs l'utilisation d'un racleur mécanique durant la phase de préservation comporte un risque opérationnel de blocage du racleur, ce qui le cas échéant pourrait entraîner les conditions de formation d'un bouchon d'hydrate.

### Objet et résumé de l'invention

La présente invention a donc pour but principal de fournir un procédé amélioré pour faciliter le redémarrage de la production dans une conduite sous-marine de liaison fond-surface, après un arrêt de production prolongé et notamment éviter la formation d'hydrates lors de ce redémarrage de la production.

Conformément à l'invention, ce but est atteint en fournissant un procédé d'arrêt et redémarrage de la production d'une conduite sous-marine de production de liaison fond-surface comprenant une première partie de conduite reposant au fond de la mer depuis une tête de puits jusqu'à l'extrémité inférieure d'une deuxième partie de conduite s'élevant jusqu'à un navire ou support flottant en surface, dans lequel procédé, à l'arrêt de la production, au moins la dite première partie de conduite est remplie d'un fluide de production dépressurisé,
**caractérisé en ce que** l'on réalise les étapes de redémarrage suivantes dans lesquelles :
e1) on forme un gel à partir de deux réactifs dans une première chambre de formation de gel au fond de la mer, la dite première chambre communiquant avec l'extrémité de la première partie de conduite la plus proche de la tête de puits, la dite première chambre étant de préférence formée d'un tronçon de conduite *in situ* au fond de la mer dont l'extrémité débouche à proximité de l'extrémité la plus proche de la tête de puits de la première partie de conduite reposant au fond de la mer, et
e2) on envoie une quantité de dit gel dans la première partie de conduite depuis la dite première chambre formant un tronçon de gel de séparation poussant le fluide froid contenu dans la première partie de conduite vers la deuxième partie de conduite, avant de fermer la dite première chambre, puis
e3) on démarre la production en envoyant depuis la tête de puits du fluide de production dans la première partie de conduite en arrière du dit tronçon de gel de séparation, le dit fluide de production poussant le dit tronçon de gel dans la dite conduite de liaison fond - surface vers son sommet, le dit gel formant une séparation physique et isolation thermique entre d'une part, le fluide de production en arrière du dit tronçon de gel au sein de la première partie de conduite et d'autre part, un fluide dégazé au moins partiellement en avant dudit tronçon de gel au sein de la dite première partie de conduite de production.

L'invention propose ainsi essentiellement à utiliser un gel qui isole physiquement et thermiquement l'ancien fluide froid et dépressurisé du nouveau fluide chaud de production.

On comprend que le dit gel est suffisamment visqueux et en quantité suffisante pour former une séparation physique empêchant le contact et mélange entre les fluides situés de part et d'autre du gel dans la dite première partie de conduite de production à savoir un fluide chaud de production envoyé depuis la tête de puits et un fluide froid qui peut être un fluide froid de production de préférence dégazé initialement contenu dans la conduite depuis un arrêt de production. Cette séparation constitue une isolation thermique et physique empêchant le mélange des deux fluides de part et d'autre du gel et donc la formation d'hydrates au sein de la première partie de conduite.

Ce type de gel est connu de l'homme de l'art notamment sous la dénomination « gel pig » pour être formé en surface sur le navire ou support flottant et ensuite envoyé depuis la surface dans une conduite au fond de la mer dans les activités de pré-conditionnement de la conduite au moment de sa mise initiale en service. Néanmoins le mélange des deux réactifs est réalisé dans ces applications connues soit à l'injection depuis un bateau de support, soit en préalable à l'installation du système, par exemple une FLET (« Flowline End Termination »). Il n'existe pas d'application connue dans laquelle les réactifs sont injectés depuis un navire de traitement de pétrole (FPSO) sur le site de production sous-marin afin de créer in-situ le gel pig. Il n'existe pas non plus d'application dans laquelle le gel pig est utilisé de façon systématique pour d'autre démarrage de production que le démarrage initial après installation des lignes.

Selon la présente invention, on dispose ainsi beaucoup plus aisément et plus rapidement du gel pour l'envoyer dans la première partie de conduite lors du redémarrage de la production. Le gel remplit ici une fonction nouvelle en ce qu'il sert à séparer deux fluides de production, l'un dégazé l'autre nouvellement produit et gazé, et permet un redémarrage du champ sous-marin.

De préférence, dans le cas où le liquide de production dégazé et froid dans la première partie de conduite serait en condition de formation d'hydrate (zones Z1 ou Z2 décrites ci-après) à la pression résultant de la colonne liquide de la deuxième partie de conduite, avant le redémarrage de la production de l'étape e3), avant la mise en communication de la première partie de conduite de production avec la dite deuxième partie de conduite de production, on vide tout liquide contenu dans la dite deuxième partie de conduite.

De préférence encore, à l'étape e3), on favorise la remontée du fluide de production dans la dite deuxième partie de conduite de production, en envoyant depuis le navire ou support flottant en surface du gaz dans une première conduite annexe de transport de gaz qui s'étend depuis la surface jusqu'à l'extrémité inférieure de la deuxième partie de conduite de production à laquelle elle est reliée.

La vidange de la dite deuxième partie de conduite avant le redémarrage de la production de l'étape e3), avant la mise en communication de la première partie de conduite de production remplie de fluide de production avec la dite deuxième partie de conduite de production, permet d'éviter une remontée brutale en pression du fluide à l'intérieur de la première partie de conduite reposant au fond de la mer dans la dite première partie de conduite lors de la mise en communication de la première partie de conduite avec la deuxième partie de conduite de production par ouverture d'une première vanne V3 ce qui pourrait provoquer la formation d'hydrates dans la dite première partie de conduite. La dite première partie de conduite se trouve ainsi maintenue à une pression ne permettant pas la formation d'hydrates à température du fond de la mer soit environ 4°C.

Plus particulièrement, à l'étape e1), on réalise les étapes dans lesquelles :
e1-1) on envoie, de préférence depuis le navire ou support flottant en surface, un premier composé liquide réactif dans une deuxième conduite annexe s'étendant jusque dans un premier mélangeur statique situé au fond de la mer et débouchant dans la dite première chambre, et
e1-2) en parallèle à e1-1), on envoie, de préférence depuis le navire ou support flottant en surface, un deuxième composé liquide réactif dans une troisième conduite annexe s'étendant jusque dans le dit premier mélangeur statique situé au fond de la mer et débouchant dans la dite première chambre, et
e1-3) on mélange les deux réactifs au sein du dit mélangeur statique et on laisse le gel de séparation se former par réaction des deux réactifs en mélange au sein de la dite première chambre.

Alternativement, aux étapes e1-1) et e1-2), les dit premier et deuxième composés réactifs peuvent être stockés dans des réservoirs au fond de la mer et donc transférés depuis les dits réservoirs au fond de la mer jusqu'au dit premier mélangeur statique.

Plus particulièrement encore, après l'étape e1), on remplace les réactifs contenus dans les dites deuxième et troisième conduites annexes par un fluide inerte de remplacement, de préférence du méthanol. Ceci permet d'éviter aux dits réactifs de stagner dans les dites conduites et de se dégrader le cas échéant et conduire à la formation ultérieure de gel impropre à assurer les fonctions de séparation et de déplacement visées ici.

Plus particulièrement, on remplace les réactifs contenus dans les dites deuxième et troisième conduites annexes par un fluide inerte de remplacement, de préférence du méthanol, en envoyant le dit fluide de remplacement depuis le navire ou support flottant en surface, dans la dite deuxième conduite annexe et en évacuant le contenu de la dite deuxième conduite annexe vers la troisième conduite annexe puis vers le sommet de la troisième conduite annexe au niveau du navire ou support flottant, les deux dites deuxième et troisième conduites annexes étant rendues aptes à communiquer entre elles, de préférence juste avant le dit premier mélangeur. Ceci peut se réaliser si les deux dites deuxième et troisième conduites annexes sont rendues aptes à communiquer entre elles juste avant le dit premier mélangeur au travers d'une vanne de communication V9 ouverte, des vannes d'isolation de ces deuxième et troisième conduites annexes avec le premier mélangeur respectivement V8 et V11 étant fermées. Alternativement il est possible de remplacer les réactifs jusqu'au mélangeur par circulation de ce même fluide inerte de remplacement, de préférence du méthanol en fermant ou gardant fermée la vanne de communication V9 entre les deuxième et troisième conduites annexes, une vanne de communication V4 entre la première chambre et l'extrémité distale de la première partie de conduite de production étant fermée, et les vannes d'isolation des deuxième et troisième conduites annexes avec le premier mélangeur étant ouvertes (respectivement V8 et V9).

Plus particulièrement, à l'étape e2), on envoie un fluide inerte de remplacement, tel que du méthanol, depuis le navire ou support flottant en surface, dans une dite deuxième ou troisième conduite annexe qui pousse le dit gel de séparation depuis la dite première chambre vers la dite première partie de conduite de production.

Plus particulièrement, de façon connue à l'étape e3), on envoie un composé inhibiteur de formation d'hydrate, de préférence du méthanol, depuis le navire ou support flottant en surface, dans une dite deuxième ou troisième conduite annexe jusqu'à l'extrémité de la première partie de conduite de production à proximité de la tête de puits, dans le fluide de production envoyé dans la première partie de conduite.

Selon un autre aspect de l'invention après l'arrêt de la production, on réalise tout d'abord une première dépressurisation de la conduite sous-marine de production de liaison fond-surface entière en laissant une partie seulement du gaz contenu dans le fluide de production contenu dans la dite conduite de production s'évacuer en surface par son extrémité supérieure,
caractérisé en ce qu'on réalise ensuite les étapes ultérieures suivantes dans lesquelles :
a) on isole la dite première partie de conduite de production de la dite deuxième partie de conduite, et on laisse le fluide de production dans la dite première partie de conduite de production, et pas dans la dite deuxième partie de conduite qui est vidangée, et
b) on réalise une dépressurisation complémentaire de la première partie de conduite de production remplie de fluide production, en diminuant la pression dans la dite première partie de conduite et en en évacuant plus complètement le gaz contenu dans le fluide de production qu'elle contient.

Ce dégazage complémentaire du fluide de production contenu dans la première partie de conduite, permet de diminuer de façon plus importante la pression de la première partie de conduite jusqu'à un niveau sensiblement identique à la pression en surface et ainsi écarter davantage un risque de formation d'hydrates dans la dite première partie de conduite reposant au fond de la mer sans avoir à effectuer de remplacement de fluide en son sein. Autrement, la pression au niveau de la premier partie de conduite et au niveau de la tête de puits serait liée à la colonne hydrostatique de la dite deuxième partie de conduite et la dépressurisation ne permettrait pas d'écarter dans certains cas le risque de formation d'hydrates.

Plus particulièrement, pour l'arrêt de la production et la réalisation de la première dépressurisation de la conduite entière, on ferme au moins une vanne V2 à l'extrémité la plus proche de la tête de puits de la première partie de conduite reposant au fond de la mer et on ouvre une vanne V0 au sommet de la deuxième partie de conduite en surface.

Plus particulièrement, on réalise la dépressurisation complémentaire de la de la première partie de conduite de production en :
- isolant la première partie de conduite par rapport à la deuxième partie de conduite, en fermant une première vanne V3 au niveau de la liaison entre l'extrémité de la première partie de conduite et l'extrémité inférieure de deuxième partie de conduite, la dite première vanne V3 ainsi fermée empêchant la communication de fluide entre la dite première partie de conduite et la dite deuxième partie de conduite, et
- ouvrant une deuxième vanne V5 ou V5' située à proximité de la dite première vanne V3, la dite deuxième vanne débouchant directement sur une conduite annexe de remontée de gaz remontant jusqu'au navire ou support flottant en surface directement ou via un réservoir tampon, de préférence une conduite tampon décrite ci-après.

Selon un premier mode de réalisation, on réalise les étapes suivantes :
a1) à l'étape a), après avoir isolé la dite deuxième partie de conduite de la dite première partie de conduite, on remplace le fluide de production au sein de la dite deuxième partie de conduite en injectant un fluide inerte de remplacement dans une deuxième conduite annexe s'étendant depuis un premier réservoir sur le navire ou support flottant en surface jusqu'à l'extrémité inférieure de la deuxième partie de conduite isolée de la première partie de conduite, de préférence un fluide inerte comportant ou constituant en outre un produit inhibiteur de la formation d'hydrates ; et
b1) à l'étape b), on réalise une dépressurisation complémentaire de la première partie de conduite de production isolée de la dite deuxième partie de conduite et remplie de fluide production, en diminuant la pression dans la dite première partie de conduite et en évacuant plus complètement le gaz contenu dans le fluide de production qu'elle contient, vers une conduite annexe d'évacuation de gaz s'étendant depuis l'extrémité de la dite première partie de conduite de production la plus proche de l'extrémité inférieure de la dite deuxième partie de conduite de production jusqu'au navire ou support flottant en surface.

Plus particulièrement encore, à l'étape a1), on remplace le fluide de production au sein de la dite deuxième partie de conduite en injectant un fluide inerte de remplacement, de préférence un fluide inerte comportant ou constituant en outre un produit inhibiteur de la formation d'hydrates, depuis un premier réservoir sur le navire ou support flottant en surface dans une première conduite annexe de remontée de gaz ou une deuxième conduite annexe s'étendant jusqu'à l'extrémité inférieure de la deuxième partie de conduite que l'on isole préalablement de la première partie de conduite après dépressurisation de la dite première partie de conduite, le dit fluide inerte remplaçant et repoussant ainsi le fluide de production vers le navire ou support flottant.

Plus particulièrement, avant les étapes de redémarrage de la production de l'étape e3), avant de remettre la première partie de conduite reposant au fond de la mer en communication avec la deuxième partie de conduite s'élevant en surface et envoyer du fluide production depuis la tête de puits, on vidange la dite deuxième partie de conduite par injection de gaz inerte dans la deuxième partie de conduite depuis le sommet de la deuxième partie de conduite et on évacue le fluide inerte de remplacement dans la deuxième partie de conduite vers la surface via une première conduite annexe de remontée de gaz qui s'étend depuis l'extrémité inférieure de la dite deuxième partie de conduite à laquelle elle est reliée jusqu'en surface. Cette opération est nécessaire dans le cas où la production dégazée et froide dans la première partie de conduite serait en condition de formation d'hydrates à la pression résultant de la colonne liquide de la deuxième partie de conduite. Dans le cas contraire, c'est-à-dire si la production dégazée à température du fond de la mer n'était pas apte à former des hydrates même à la pression résultant de la mise en communication de la première et deuxième partie de conduite sans vidange de cette dernière, il n'est donc pas nécessaire de vider la deuxième partie de conduite de son fluide de remplacement.

Il est ensuite nécessaire de dépressuriser le gaz ayant servi à purger la dite deuxième partie de conduite et la dite première conduite annexe avant de pouvoir ouvrir la dite première vanne V3 de séparation entre les dites première et deuxième parties de conduite de production et y envoyer du fluide de production depuis la tête de puits.

Ceci permet d'éviter une remontée brutale en pression du fluide à l'intérieur de la première partie de conduite reposant au fond de la mer ce qui pourrait provoquer la formation d'hydrates dans la dite première partie de conduite lors de la mise en communication de la première partie de conduite avec la deuxième partie de conduite de production puisque la dite première partie de conduite se trouve ainsi maintenue à une pression correspondant à la pression atmosphérique en surface.

Selon un deuxième mode de réalisation, on réalise les étapes suivantes dans lesquelles :
a2) à l'étape a), on laisse le fluide de production dans la dite première partie de conduite de production, et on vidange la dite deuxième partie de conduite isolée de la dite première partie de conduite, en transférant le fluide de production au sein de la dite deuxième partie de conduite dans un réservoir tampon relié à l'extrémité inférieure de la dite deuxième partie de conduite, le dit réservoir tampon étant de préférence une conduite tampon s'étendant au fond de la mer depuis l'extrémité inférieure de la dite deuxième partie de conduite, et
b2) à l'étape b), on réalise une dépressurisation complémentaire de la première partie de conduite de production remplie de fluide de production, en la mettant en communication avec la dite deuxième partie de conduite et en évacuant plus complètement le gaz contenu dans le fluide de production de la première partie de conduite vers la dite deuxième partie de conduite de production préalablement vidée de tout liquide.

On comprend que la dite conduite tampon forme un réservoir tampon en ce qu'elle est reliée à l'extrémité inférieure de la dite deuxième partie de conduite du côté de son extrémité dite proximale, son extrémité distale étant fermée.

Plus particulièrement, à l'étape a2), pour transférer le fluide de production de la dite deuxième partie de conduite vers un réservoir tampon formé par une conduite tampon s'étendant au fond de la mer depuis l'extrémité inférieure de la dite deuxième partie de conduite, on évacue concomitamment le gaz contenu dans la conduite tampon via une première conduite annexe de remontée de gaz qui lui est reliée par des vannes situées d'une part au niveau de son extrémité proximale et d'autre part au niveau de son extrémité distale.

De préférence, dans ce deuxième mode de réalisation, avant le redémarrage de la production des étapes e1) à e3), on réalise la vidange dudit réservoir tampon, de préférence de la dite conduite tampon. Ceci permet que la conduite tampon soit disponible pour y vidanger la deuxième partie de conduite à l'occasion d'un prochain arrêt de production.

Plus particulièrement encore, pour vidanger la conduite tampon, on introduit un gel de séparation au niveau de l'extrémité distale de la conduite tampon et on le pousse par injection de gaz de manière à le déplacer avec le contenu liquide de la conduite tampon vers l'extrémité inférieure de la deuxième partie de conduite puis tout le long de celle-ci pour l'évacuer à son sommet. On comprend que le gel de séparation forme un racleur chimique suffisamment solide et étanche pour pouvoir être poussé par le gaz et le séparer physiquement du contenu liquide de la conduite tampon et ainsi la vidanger. Par ailleurs, l'absence de gel séparateur entre le gaz et la production restante dans la conduite tampon conduirait à une vidange inefficace du liquide de production.

Selon un autre aspect de l'invention, avant la vidange de la conduite tampon par introduction d'un gel de séparation, on réalise les étapes suivantes dans lesquelles :
c) on forme un gel à partir de deux réactifs dans une deuxième chambre de formation de gel de séparation au fond de la mer, la dite deuxième chambre communiquant avec l'extrémité distale de la conduite tampon, la dite deuxième chambre étant de préférence formée d'un tronçon de conduite *in situ* au fond de la mer dont l'extrémité débouche à proximité de l'extrémité distale de la conduite tampon reposant au fond de la mer, et
d) on envoie une quantité de dit gel de séparation dans la conduite tampon depuis la dite deuxième chambre formant un tronçon de gel de séparation poussant le fluide contenu dans la conduite tampon jusqu'au sommet de la dite deuxième partie de conduite de production, avant de fermer la dite deuxième chambre.

Plus particulièrement à l'étape d), une fois le gel de séparation dans la conduite tampon, du gaz est injecté depuis le navire ou support flottant en surface via une première conduite annexe et une conduite de dérivation débouchant à l'extrémité distale de la conduite tampon pour pousser le gel de séparation et le fluide production en aval de celui-ci jusqu'au sommet de la dite deuxième partie de conduite de production.

Plus particulièrement, pour former le gel à l'étape c), on réalise les étapes dans lesquelles :
c1) on envoie, de préférence depuis le navire ou support flottant en surface, un premier composé liquide réactif dans une dite deuxième conduite annexe puis une deuxième conduite de dérivation s'étendant jusqu'à un deuxième mélangeur statique situé au fond de la mer et débouchant dans la dite deuxième chambre, et
c2) on envoie, de préférence depuis le navire ou support flottant en surface, un deuxième composé liquide réactif dans une troisième conduite annexe puis une troisième conduite de dérivation s'étendant jusqu'au dit deuxième mélangeur statique situé au fond de la mer et débouchant dans la dite deuxième chambre, et
c3) on mélange les deux réactifs au sein du dit deuxième mélangeur statique et on laisse le gel de séparation se former par réaction des deux réactifs en mélange au sein de la dite deuxième chambre.

Alternativement, aux étapes c1) et c2), les dit premier et deuxième composés réactifs peuvent être stockés dans des réservoirs au fond de la mer et donc transférés depuis les dits réservoirs au fond de la mer jusqu'au dit deuxième mélangeur statique.

Plus particulièrement, après l'étape d), on remplace les réactifs contenus dans les dites deuxième et troisième conduites annexes et dites deuxième et troisième conduites de dérivation par un fluide inerte de remplacement, de préférence du méthanol.

Ceci permet d'éviter aux dits réactifs de stagner dans les dites conduites, de potentiellement se dégrader et le cas échéant de conduire à la formation ultérieure d'un gel impropre à assurer les fonctions de séparation et de déplacement visées ici.

Plus particulièrement encore, on remplace les réactifs contenus dans les dites deuxième et troisième conduites annexes et dites deuxième et troisième conduites de dérivations par un fluide inerte de remplacement, de préférence du méthanol, en envoyant le dit fluide de remplacement depuis le navire ou support flottant en surface, dans la dite deuxième conduite annexe et en évacuant le contenu de la dite deuxième conduite annexe vers la troisième conduite annexe puis vers le sommet de la troisième conduite annexe au niveau du navire ou support flottant en surface, les deux dites deuxième et troisième conduites annexes étant rendues aptes à communiquer entre elles, de préférence juste avant le dit deuxième mélangeur.

Ceci peut se réaliser en évacuant le dit contenu de la troisième conduite annexe à travers une vanne V14 ouverte de communication entre les deux dites deuxième et troisième conduites annexes juste avant le dit deuxième mélangeur ou au contraire, à travers le dit deuxième mélangeur en fermant ou gardant fermée la vanne V14 de communication entre les deuxième et troisième conduites annexes, une vanne de communication V6' entre la deuxième chambre et l'extrémité distale de la conduite tampon étant fermée, et des vannes V13 et V18 d'isolation des deuxième et troisième conduites annexes avec le dit deuxième mélangeur étant ouvertes.

Plus particulièrement, à l'étape d), avant de fermer la dite deuxième chambre, on envoie un fluide inerte tel que du méthanol depuis le navire ou support flottant en surface, dans une dite deuxième ou troisième conduite annexe et une dite deuxième ou troisième conduite de dérivation qui pousse le dit gel de séparation depuis la dite deuxième chambre dans la dite conduite tampon avant d'être poussé vers le sommet de la dite deuxième partie de conduite de production par injection de gaz à l'extrémité de la conduite tampon.

Plus particulièrement encore, à l'étape d) ou après l'étape d), on réalise la remontée du gel et du liquide dans la dite conduite tampon puis dans la deuxième partie de conduite de production, en envoyant depuis le navire ou support flottant en surface dans la dite première conduite annexe du gaz inerte débouchant au niveau de l'extrémité distale de la conduite tampon.

La présente invention fournit également une installation de production de fluide tel que du pétrole brut utile pour la mise en œuvre d'un procédé selon l'invention, comprenant au moins :
- un navire ou support flottant en surface comprenant au moins trois réservoirs, et
- une conduite sous-marine de production de liaison fond-surface comprenant une première partie de conduite reposant au fond de la mer depuis une tête de puits jusqu'à l'extrémité inférieure d'une deuxième partie de conduite s'élevant jusqu'au navire ou support flottant en surface, et
- une première conduite annexe de transport de gaz s'étendant au moins depuis le navire ou support flottant en surface jusqu'à l'extrémité inférieure de la dite deuxième partie de conduite, et
- une deuxième conduite annexe s'étendant au moins depuis Z le premier ou deuxième réservoir contenant un fluide inerte de remplacement ou un premier réactif de gel de séparation, sur le navire ou support flottant en surface jusqu'à un premier mélangeur statique situé au fond de la mer, la dite deuxième conduite annexe étant apte à transférer le fluide inerte de remplacement ou le premier réactif de gel de séparation, dans le dit premier mélangeur, et
- une troisième conduite annexe s'étendant au moins depuis le troisième réservoir contenant un deuxième réactif de gel de séparation sur le navire ou support flottant en surface jusqu'au premier mélangeur statique, la dite troisième conduite annexe étant apte à transférer un deuxième réactif de gel de séparation, dans le dit premier mélangeur, et
- une première chambre de formation de gel de séparation, de préférence formée d'un tronçon de conduite, située au fond de la mer à une extrémité de laquelle le dit premier mélangeur débouche, la dite première chambre débouche à son autre extrémité à proximité de l'extrémité la plus proche de la tête de puits de la première partie de conduite reposant au fond de la mer.

Plus particulièrement, l'installation selon l'invention comprend une pluralité de vannes comprenant au moins :
- une vanne apte à isoler ou faire communiquer entre elles la dite première chambre et l'extrémité de la dite première partie de conduite de production la plus poche de la tête de puits, et
- des vannes aptes à isoler ou faire communiquer la dite deuxième et respectivement dite troisième conduites annexes avec le dit premier mélangeur, et
- de préférence, une vanne apte à isoler ou faire communiquer entre elles les dites deuxième et troisième conduites annexes juste avant le dit premier mélangeur.

Plus particulièrement, l'installation comprend une pluralité de vannes comprenant au moins :
- une vanne apte à isoler ou faire communiquer entre elles la dite première conduite annexe de transport de gaz et l'extrémité inférieure de la dite deuxième partie de conduite de production, et
- une vanne apte à isoler ou faire communiquer entre elles les dite première partie de conduite de production et deuxième partie de conduite de production bout à bout.

Dans un premier mode de réalisation, l'installation selon l'invention comprend une vanne apte à isoler ou faire communiquer entre elles la dite deuxième conduite annexe et l'extrémité inférieure de la dite deuxième partie de conduite.

Plus particulièrement, l'installation selon ce premier mode de réalisation comprend en outre une vanne apte à isoler ou faire communiquer entre elles l'extrémité proximale de la dite première partie de conduite de production et l'extrémité inférieure soit d'une quatrième conduite annexe remontant directement en surface, soit d'une partie inférieure de la dite première conduite annexe reliée via une vanne d'isolation ou communication à une partie supérieure de la dite première conduite annexe, la dite première partie de la dite première conduite annexe étant reliée à une vanne apte à isoler ou faire communiquer entre elles la dite première conduite annexe et l'extrémité inférieure de la dite deuxième partie de conduite de production.

Dans un deuxième mode de réalisation, l'installation comprend en outre un réservoir tampon relié à l'extrémité inférieure de la dite deuxième partie de conduite, le dit réservoir tampon étant de préférence une conduite tampon s'étendant au fond de la mer depuis l'extrémité inférieure de la dite deuxième partie de conduite.

Plus particulièrement encore dans ce deuxième mode de réalisation, l'installation comprend en outre une deuxième chambre de formation de gel de séparation, de préférence formée d'un tronçon de conduite, située au fond de la mer à une extrémité de laquelle un deuxième mélangeur statique débouche, la dite deuxième chambre débouchant à son autre extrémité à proximité de l'extrémité distale de la conduite tampon reposant au fond de la mer.

Plus particulièrement encore dans ce deuxième mode de réalisation, l'installation comprend en outre :
- une première conduite de dérivation de transport de gaz s'étendant depuis la dite première conduite annexe jusqu'à l'extrémité distale de la conduite tampon,
- une deuxième conduite de dérivation s'étendant depuis la dite deuxième conduite annexe jusqu'à un deuxième mélangeur statique situé au fond de la mer et débouchant dans une deuxième chambre, et
- une troisième conduite de dérivation s'étendant depuis une troisième conduite annexe jusqu'au dit deuxième mélangeur statique situé au fond de la mer et débouchant dans la dite deuxième chambre, et
- la dite deuxième chambre débouchant à l'extrémité distale de la conduite tampon.

Plus particulièrement encore dans ce deuxième mode de réalisation, l'installation comprend une pluralité de vannes comprenant au moins :
- une vanne apte à isoler ou faire communiquer entre elles l'extrémité proximale de la conduite tampon et l'extrémité inférieure de la dite deuxième partie de conduite de production, et
- une vanne apte à isoler ou faire communiquer entre elles l'extrémité distale de la conduite tampon et l'extrémité distale de la dite première conduite de dérivation de transport de gaz, et
- de préférence, une vanne apte à isoler ou faire communiquer l'extrémité distale de la dite première conduite annexe de transport de gaz ou l'extrémité proximale de la dite première conduite de dérivation de transport de gaz avec l'extrémité proximale de la conduite tampon.

Plus particulièrement encore dans ce deuxième mode de réalisation, l'installation comprend une pluralité de vannes comprenant au moins :
- des vannes aptes à isoler ou faire communiquer la dite deuxième et respectivement dite troisième conduites de dérivation avec le dit deuxième mélangeur, et
- de préférence, une vanne apte à isoler ou faire communiquer entre elles les dites deuxième et troisième conduites de dérivation juste avant le dit deuxième mélangeur.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la figure 1 est une vue schématique d'une installation de préservation d'une conduite de production lors de l'arrêt de la production et redémarrage de la production selon la technique antérieure à boucle conventionnelle ou hybride;
- les figures 1A à 1C sont des vues schématiques d'une installation de préservation d'une conduite de production lors de l'arrêt de la production et redémarrage de la production selon un premier mode de réalisation de l'invention de l'exemple 1;
- les figures 2A et 2B sont des vues schématiques d'une installation de préservation d'une conduite de production lors de l'arrêt de la production et redémarrage de la production selon un deuxième mode de réalisation de l'invention de l'exemple 2; et
- la figure 3, représente des courbes illustrant des conditions opératoires en termes de pression P et température T vis-à-vis de la formation d'hydrates dans la dite première conduite 1-1 reposant au fond de la mer remplie de fluide de production.

### Description détaillée de l'invention

Dans la présente description, on entend par « vanne », une vanne apte à isoler ou faire communiquer entre elles deux conduites.

Sur la figure 1 on montre une installation de mise en sécurité d'une conduite de liaison fond-surface 1 de production pour la mise en sécurité de la conduite lors de l'arrêt et le redémarrage de la production dans lequel selon la technique antérieure on réalise une boucle avec une conduite annexe 18 reliée à l'extrémité de la conduite de production 1 et réalisant une boucle apte à remplacer le fluide de production par un fluide inerte de remplacement dans la conduite de liaison fond-surface 1 entière.

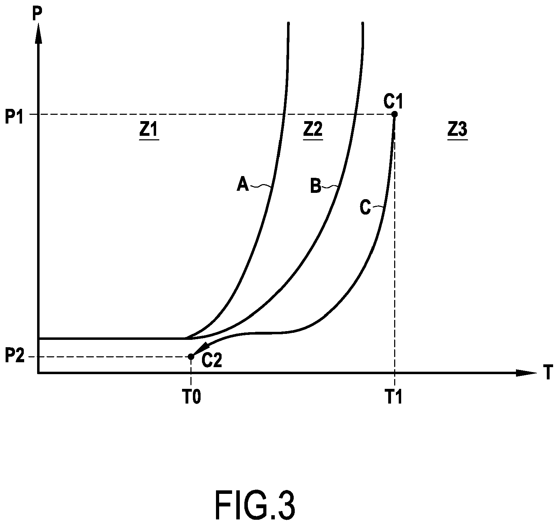

Sur la figure 3, on a représenté les courbes typiques illustrant des conditions opératoires en termes de pression P et température T vis-à-vis de la formation d'hydrates dans la dite première conduite 1-1 reposant au fond de la mer remplie de fluide de production comme suit :
- La courbe A correspond aux conditions de formation de cristaux d'hydrates.
- La courbe B correspond aux conditions de dissolution/ dissociation des cristaux d'hydrate.
- La zone Z1 est la zone de formation d'hydrates, la zone Z2 est une zone de risque de formation de cristaux d'hydrates. Les zones Z1 et Z2 représentent les conditions que l'on souhaite éviter. La zone Z3 est la zone sans formation d'hydrates dans laquelle la production du champ pétrolier sous-marin est opérée de façon standard à ce jour.
- La dépressurisation de la dite première conduite 1-1 selon l'invention permet de suivre l'évolution descendante le long de la courbe C depuis C1 à C2.

Lors d'un arrêt de production non prévu, il est possible que la vanne V0 au sommet de la deuxième partie de conduite 1-2 soit fermée avant que la vanne de production de tête de puits V1 ne le soit. Il en résulte une montée en pression de la conduite de production 1, et potentiellement une légère élévation de température due à la compression du gaz de production, visible dans la première partie ascendante de la courbe C. Puis le refroidissement après arrêt de la production cause l'évolution vers la gauche de C1. Si le fluide de production était laissé en l'état, alors la courbe C atteindrait la zone Z1.

La courbe C présentée en figure 3 illustre le chemin représentant l'évolution recherchée du couple (Pression, Température) selon la présente invention pour le fluide de production dans la dite première conduite 1-1 reposant au fond de la mer depuis le point de production normale C1, aux conditions de pression P1 et température T1, jusqu'à l'état préservé au point C2 à la température finale T0 qui est celle du fond de la mer soit 4°C environ, et pression finale P2 qui est inférieure à la pression de formation d'hydrates à la température du fond de la mer T0. Outre les conditions de pression et de température illustrées en figure 3, la formation d'hydrate nécessite la présence de molécules de gaz (gaz d'hydrocarbone du méthane au butane, gaz acides CO₂ ou H₂S, ou d'azote) et d'eau libre.

La présente invention permet donc de préserver la conduite 1 sans remplacement de fluide, économisant ainsi le temps opérationnel nécessaire au remplacement du fluide de production par un fluide inerte généralement observé.

Pour indiquer les positions relatives des extrémités ou des positions intermédiaires des différentes conduites ou des vannes, dans la présente description ci-après, les termes « proximale » ou « (en) avant » se réfèrent à une position plus proche du navire ou support flottant en surface et « distale » ou « en arrière » ou « après » se réfèrent à une position plus éloignée du navire ou support flottant en surface par rapport à un autre point tel qu'une autre vanne ou autre extrémité de conduite en suivant le trajet d'un fluide s'écoulant dans la conduite à cette position.

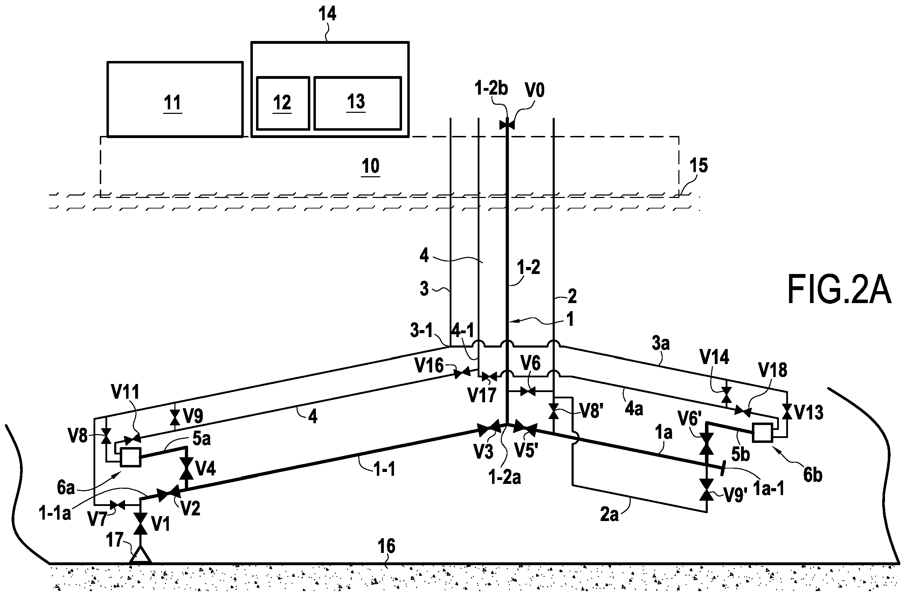

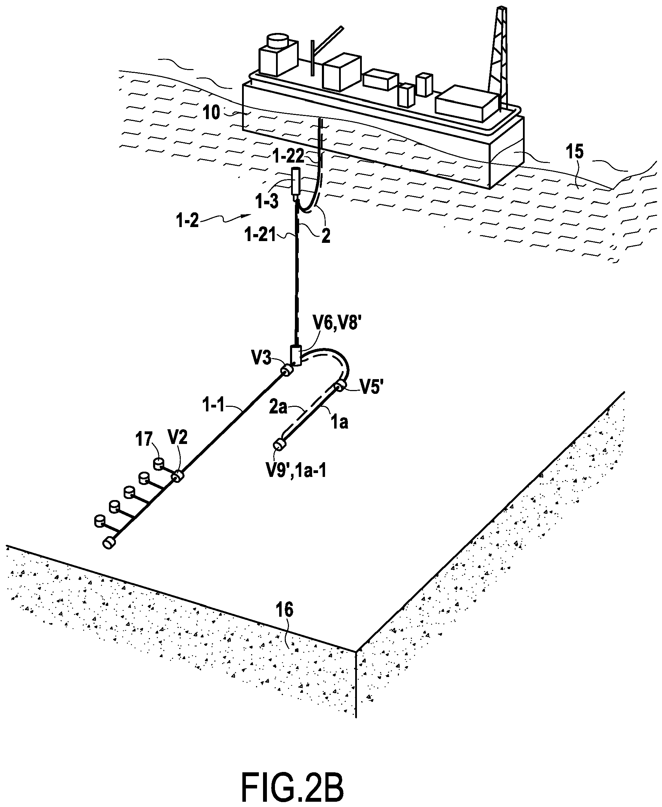

Dans les deux modes de réalisation des figures 1A-1C d'une part et figures 2A-2B d'autre part, décrits dans les exemples 1 et 2 ci-après, on réalise la mise en sécurité ou préservation lors de l'arrêt de la production et le redémarrage de la production d'une conduite sous-marine de liaison fond-surface 1 comprenant une première partie conduite de production 1-1 (aussi dénommée ci-après « première conduite de production 1-1 ») reposant au fond de la mer 16 depuis une tête de puits 17 jusqu'à une vanne V3 communiquant avec l'extrémité inférieure 1-2a d'une deuxième partie de conduite 1-2 (aussi dénommée ci-après « deuxième conduite de production 1-2 ») s'élevant jusqu'à un navire ou support flottant 10 en surface 15. La deuxième partie de conduite 1-2 peut être constituée d'un riser sensiblement vertical jusqu'en surface ou constituée d'une conduite hybride composée d'une colonne montante de conduite rigide ou riser 1-21 sensiblement verticale tensionnée à son sommet 1-2c par un flotteur 1-3 en subsurface et une conduite flexible 1-22 en forme de double chaine plongeante assurant la liaison du riser 1-21 jusqu'au navire ou support flottant 10.

Dans les deux modes de réalisation, à l'arrêt de la production on réalise tout d'abord une première dépressurisation de la conduite de production 1 entière suivi d'une dépressurisation complémentaire de la première partie de conduite 1-1 remplie de fluide de production, en isolant la première partie de conduite 1-1 par rapport à la deuxième partie de conduite 1-2, et on remplace le fluide de production de la deuxième partie de conduite 1-2 par un gaz ou un fluide de remplacement.

De préférence dans les deux modes de réalisation, on vidange de tout liquide la deuxième partie de conduite 1-2 avant de la remettre en communication avec la première conduite 1-1 avant le redémarrage de la production.

Dans les deux modes de réalisation, au redémarrage de la production, on met en œuvre un tronçon de gel qui isole physiquement et thermiquement l'ancien fluide de production froid et dépressurisé du nouveau fluide chaud de production.

Dans les deux modes de réalisation, l'installation comprend une première conduite annexe 2 d'amenée ou évacuation de gaz s'étendant depuis le navire ou support flottant 10 en surface jusqu'au moins l'extrémité inférieure 1-2a du riser 1-21 avec laquelle elle communique via une vanne V6. Cette première conduite annexe 2 servira comme explicité ci-après à favoriser la remontée du fluide de production au sein de la deuxième conduite 1-2 en phase de production, mais aussi à permettre le remplacement du fluide de production dans la deuxième partie de conduite 1-2 par un fluide inerte à l'exemple 1, ou la vidange du fluide inerte de remplacement de la deuxième partie de conduite 1-2 à l'exemple 1 ou l'évacuation de gaz pour dépressuriser la première conduite de production à l'exemple 1 ou encore pour la vidange de la conduite tampon à l'exemple 2 par injection de gaz à l'amont du gel de séparation à l'extrémité distale de la conduite tampon 1a-1.

La tête de puits 17 communique avec l'extrémité distale de la première conduite 1-1 reposant au fond de la mer via un tronçon de conduite 1-1a délimité par une vanne V1 du côté de la tête de puits 17 et une vanne V2 de l'autre côté débouchant sur l'extrémité distale de la première conduite de production 1-1.

Une deuxième conduite annexe 3 d'injection de liquide s'étend depuis un premier réservoir 11 sur le navire ou support flottant contenant du méthanol ou mélange eau/méthanol (à savoir un produit inhibiteur de la formation d'hydrates) ou depuis un deuxième réservoir 12 sur le navire ou support flottant 10 en surface jusqu'à une vanne V7 à son extrémité distale au fond de la mer débouchant sur le tronçon de conduite 1-1a.

Le deuxième réservoir 12 contient un liquide constitué d'un composé réactif B. Ce réactif B est de préférence un produit inhibiteur de la formation d'hydrates, du type glycol ou MEG ou méthanol, mais qui est aussi apte à former un liquide gélifié ci-après dénommé « gel de séparation », en mélange avec un composé réactif A contenu dans un troisième réservoir 13, le réactif A étant un agent gélifiant pouvant être un agent de réticulation ou un polymère ou un mélange des deux, généralement de composition propriétaire. Des exemples d'agent gélifiants sont le borate, ou un polymère tel que le HPG (HydroxyPropyl Guar). On peut utiliser par exemple les produits gélifiants de références commerciales suivantes :
- le GPG (Glycol Pipeline Gel) avec le produit gélifiant associé GPG Gelling agent commercialisés par la société Alchemy Oilfield Services Ltd.,
- des agents gélifiants comme l'E-gel commercialisé par la société Weatherford,
- des gels pour des applications comme le déshuilage de conduites commercialisés par la société Intelligent gels, et
- des produits dénommés « gel pigs » (gels de séparation, de raclage) rigides ou semi-rigides commercialisés par la société Inpipe products.

Ce gel de séparation solide sera utilisé comme barrière de séparation physique, chimique et thermique intercalé entre le fluide chaud de production et le fluide froid dégazé contenu dans la première conduite 1-1, le fluide chaud poussant le gel et le fluide froid vers la surface sans provoquer de risque de formation de bouchons. En effet le fluide de production nouvellement produit est inhibé par méthanol mais seulement pour la quantité d'eau produite associée. Le mélange de ce fluide de production gazé avec le fluide de production dégazé, mais froid et contenant de l'eau non-inhibée pourrait en principe mener à la formation d'hydrates. C'est donc une situation que les règles d'opération actuelles exigent d'éviter.

Dans les deux modes de réalisation, un tronçon de conduite formant une première chambre 5a de formation de gel de séparation est disposé *in situ* au fond de la mer débouchant sur une vanne V4 de communication au niveau de l'extrémité distale de la dite première conduite 1-1 avant la vanne V2 du tronçon de conduite 1-1a.

Une troisième conduite annexe 4 s'étend depuis un troisième réservoir 13 jusqu'à au moins un premier mélangeur statique 6a avant le tronçon de conduite formant la première chambre 5a. Cette troisième conduite annexe 4 est destinée principalement à alimenter le premier mélangeur en réactif A stocké dans le troisième réservoir 13.

L'extrémité inférieure de la deuxième conduite annexe 3 communique aussi via une vanne V8 avec le premier mélangeur 6a. L'extrémité inférieure de la troisième conduite annexe 4 communique avec le premier mélangeur via une vanne V11. Une vanne V9 permet de faire communiquer l'une avec l'autre les dites deuxième et troisième conduites annexes 3 et 4 avant les vannes V7, V8 et V11.

Le premier mélangeur 6a permet d'alimenter la première chambre 5a en mélange réactionnel des deux réactifs A et B pour former le gel de séparation au sein de la première chambre 5a.

Dans les exemples 1 et 2 ci-après, les dites première et deuxième conduites de production 1-1 et 1-2 et la conduite tampon la sont des conduites classiquement de diamètres de 10" à 14". Les dites conduites annexes 3 et 4 et conduites de dérivations 3a et 4a sont de plus petits diamètres et dénommés classiquement comme « ombilical ». Les ombilicaux sont des faisceaux de petites conduites, ou « tubings », dont les diamètres attendus seraient de diamètres 1" à 3" pour les conduites annexes et de dérivations 3-3a et 4-4a. Les dites conduite annexe 2 et conduite annexe de dérivation 2a sont par exemple des conduites rigides de diamètre intermédiaire, typiquement de 4" à 6". Une autre possibilité est que la dite conduite annexe 2 est associée à la deuxième conduite de production 1-2 avec une configuration de conduites coaxiales dans laquelle la deuxième conduite de production 1-2 est la conduite intérieure, et la dite conduite annexe 2 est l'annulaire formée par les deux conduites coaxiales. Enfin la dite conduite annexe 2a peut être sous la forme d'un faisceau de tubings d'ombilical de diamètres de 2" à 3".

### Exemple 1 : Premier mode de réalisation des figures 1A-1C.

Dans ce premier mode de réalisation, la première conduite annexe 2 de transport de gaz communique via une vanne V6 avec l'extrémité inférieure de la deuxième conduite 1-2 avant la vanne V3 (plus proche de la surface que V3). Et la deuxième conduite annexe 3 communique avec l'extrémité inférieure de la deuxième conduite 1-2, via une dérivation 3'a à partir du point 3-1 avant la vanne V9, la conduite de dérivation 3'a comprenant une vanne V10 débouchant sur la deuxième conduite 1-2 entre les vannes V3 et V6.

Dans une première variante montrée figure 1A, la première conduite annexe 2 de transport de gaz comporte une partie supérieure 2-1 communiquant à son extrémité inférieure, avec d'une part la vanne V6, d'autre part avec une vanne V19 apte à l'isoler d'une partie inférieure 2-2 de la dite première conduite annexe 2 dont l'extrémité distale comprend une vanne V5 communiquant avec l'extrémité proximale de la première conduite 1-1 juste après la vanne V3 (plus éloignée de la surface que V3).

Dans une deuxième variante montrée figure 1B, la première conduite annexe 2 de transport de gaz ne comporte pas de dite partie inférieure 2-2 ni de vanne V19 apte à l'isoler d'une partie inférieure 2-2, mais il existe une vanne V5 communiquant avec l'extrémité proximale de la première conduite 1-1 juste après la vanne V3 qui est reliée à une quatrième conduite annexe 7 remontant en surface.

La première variante représente la solution la plus optimisée en ce que la première conduite annexe 2 est déjà présente pour l'injection de gaz (en anglais gas lift) en pied de la dite deuxième partie de conduite de production 1-2 de sorte que seule la partie inférieure de la première conduite annexe 2-1 doit être ajoutée à l'architecture.

### A) Phase de production

En phase de production, seules les vannes V0, V1, V2, V3 et V6 sont ouvertes. Toutes les autres vannes sont fermées. L'ouverture des vannes V1, V2 et V3 permet au fluide de production (pétrole brut) de remonter en surface via la conduite de liaison fond surface 1. L'ouverture de la vanne V6 et l'injection de gaz dans la conduite annexe 2 depuis la surface jusqu'à l'extrémité inférieure 1-2a de la deuxième conduite 1-2 permet de faciliter la remontée du fluide de production vers la surface dans la deuxième conduite 1-2.

A ce stade, les deuxième et troisième conduites annexes 3 et 4 ainsi que la première chambre 5a et premier mélangeur 6a sont remplis de méthanol en vue des mesures de préservation et redémarrage en cas d'arrêt ultérieur de production comme décrit ci-après.

### B) Arrêt de la production

Pour l'arrêt de la production, on ferme les vannes V0, V1 et V6. Puis, on ouvre la vanne V7 et on injecte du méthanol via la deuxième conduite annexe 3 dans la tête de puits 17 et en direction de la vanne V2 jusqu'à remplacement du fluide de production. La vanne V2 est alors fermée.

Puis, on ouvre la vanne V0 en surface à l'extrémité supérieure 1-2b de la deuxième conduite 1-2, pour permettre le dégazage du fluide de production contenu dans les deux conduites de production 1-1 et 1-2, et ainsi réaliser une première dépressurisation des dites conduites de production 1-1 et 1-2 entières.

Le fluide contenu dans la première conduite 1-1 est à une pression moyenne plus élevée que dans la deuxième conduite 1-2 du fait de la colonne de liquide dans la deuxième conduite 1-2 entre le fond et la surface. C'est pourquoi, ensuite, on effectue une dépressurisation complémentaire de celle-ci après fermeture des vannes V3 et V7, et ouverture des vannes V5 et V19 selon la variante de la figure 1A pour permettre une évacuation du gaz résiduel contenu dans le fluide de production au sein de la première conduite 1-1 et diminuer la pression dans la première conduite 1-1 afin de prévenir davantage la formation de bouchons d'hydrates. Alternativement, selon la variante de la figure 1B, la dépressurisation complémentaire de la première conduite 1-1 peut être effectuée au travers d'un ombilical dédié à savoir la quatrième conduite annexe 7, en ouvrant la vanne V5.

A titre illustratif, à une profondeur de 1000m, la pression dans la première conduite passe d'une pression de quelques dizaines de bars (soit généralement au-dessus de la pression de formation d'hydrates à température ambiante (Z1)) avant dépressurisation complémentaire à moins d'une dizaine de bars (soit Z3 zone préservée des hydrates) après dépressurisation complémentaire.

Puis, on remplace le fluide de production dans la deuxième conduite 1-2 en y injectant du fluide de replacement. Pour ce faire, les vannes V6, V8 et V9 étant fermées par défaut (position normale en opération), V7 ayant été fermée à l'étape précédente on ouvre la vanne V10, puis on injecte du méthanol ou mélange eau/méthanol à partir du réservoir 11 via la troisième conduite annexe 3 vers la deuxième conduite de production 1-2 à son extrémité inférieure 1-2a en évacuant le fluide de production au sommet 1-2b de la deuxième conduite 1-2 en surface. Puis une fois la deuxième conduite de production remplie de méthanol, on referme V10.

En pratique, à titre illustratif, pour une longueur de 1000 m de deuxième partie de conduite 1-2 cela représente environ 50m³ de fluide de remplacement.

Alternativement, le remplacement du fluide de la deuxième conduite de production 1-2 peut être effectué en injectant un fluide de remplacement, méthanol ou mélange eau/méthanol à partir du réservoir 11, au travers de la première conduite annexe 2, appelée aussi ligne d'injection de « gas lift ». Avec l'installation de la figure 1A, cette opération nécessite alors que, après la seconde dépressurisation de la première conduite de production 1-1, la vanne V19 au moins soit fermée au préalable et la vanne V6 ré-ouverte.

Plus précisément, le fluide de remplacement peut être injecté dans la partie supérieure 2-1 de la dite deuxième conduite annexe depuis le navire ou support flottant 10 vers la deuxième conduite 1-2 remplaçant et repoussant ainsi le fluide de production vers le navire ou support flottant 10, après dépressurisation de la dite première conduite 1-1, fermeture de la vanne V19 puis ouverture de la vanne V6. Ainsi le fluide de remplacement peut être injecté dans la partie supérieure de la dite deuxième conduite annexe depuis le navire ou support flottant 10 vers la deuxième conduite 1-2 remplaçant et repoussant ainsi la production vers le navire ou support flottant 10.

### C) Préparation avant le démarrage de la production

Avant de redémarrer la production, on prépare et stocke du gel de séparation dans la première chambre 5a puis on vidange la deuxième conduite 1-2, comme suit.

Pour préparer et stocker du gel de séparation dans la première chambre 5a, on ouvre les vannes V8 et V11 et on laisse fermée la vanne V9, puis, on alimente le premier mélangeur statique 6a en réactif B, du type MEG par exemple, via la deuxième conduite annexe 3 et en réactif A via la troisième conduite annexe 4 de façon à alimenter la première chambre 5a pour y former le gel de séparation. La pression dans la première chambre 5a étant supérieure à celle de l'extrémité distale de la première partie de conduite 1-1, la vanne V4 est ouverte. Il est donc assuré que le fluide de production ne reflue pas dans la première chambre 5a. Ainsi, le méthanol initialement contenu dans les conduites annexes 3 et 4, ainsi que dans le premier mélangeur 6a et la première chambre 5a est évacué via la vanne V4 dans la première conduite de production 1-1. Puis, on ferme la vanne V4, quand la première chambre 5a est entièrement pleine en mélange réactionnel (A+B) de gel de séparation et on attend que le gel se forme.

Ensuite, pour éviter de laisser stagner trop longtemps le réactif A dans la troisième conduite annexe 4 ainsi que rétablir l'état préexistant en méthanol, un remplacement est fait avec du méthanol. Pour ce faire, on ouvre la vanne V9, on ferme les vannes V8 et V11, et on envoie du méthanol depuis le réservoir 11 dans la deuxième conduite annexe 3 lequel méthanol s'évacue à travers la vanne V9 dans la troisième conduite annexe 4 puis vers le sommet de la troisième conduite annexe 4. Puis, lorsque les dites conduites annexes 3 et 4 sont pleines de méthanol, on ferme la vanne V9. Il est possible également, après évacuation du gel de séparation de la première chambre 5a, de purger le premier mélangeur 6a en gardant la vanne V9 fermée et les vannes V8 et V11 ouvertes pendant le remplacement au méthanol.

Avant le redémarrage de la production, de préférence on vidange la deuxième conduite 1-2 en y injectant du gaz inerte, de préférence du gaz déshydraté dit « gas lift », depuis son extrémité supérieure 1-2b en surface et on évacue le fluide de remplacement contenu de la deuxième conduite de production 1-2 via la première conduite annexe 2 à travers la vanne V6 ouverte, les vannes V3, V5 et V10 étant fermées. L'intérêt est ici de diminuer la pression au niveau de la première conduite 1-1 au redémarrage à l'ouverture de la vanne V3 et ainsi éviter que la pression de la colonne de liquide contenue dans la deuxième conduite 1-2 ne se reporte sur la première conduite 1-1 qui est dépressurisée à une pression de sécurité ce qui provoquerait une augmentation brutale de pression et risquerait potentiellement de créer une formation de bouchons d'hydrates dans la première conduite 1-1.

### D) Redémarrage de la production

Pour le redémarrage de la production, on ouvre les vannes V4 et V11 ou V8, et on injecte le gel de séparation depuis la première chambre 5a dans la première conduite de production 1-1 en injectant du méthanol via les vannes V11 ou V8 dans le premier mélangeur 6a. Un bouchon additionnel de méthanol peut également être créé en avant du gel de séparation après son introduction dans la première partie de conduite de production 1-1.

Puis, lorsque un tronçon de gel de séparation a été introduit dans la conduite de production 1-1, on ferme les vannes V4 ou V8, celle des deux ayant été ouverte, et on ouvre les vannes V1, V2 et V7. Et, on envoie du fluide de production chaud provenant de la tête de puits 17 en arrière du tronçon de gel de séparation lequel isole le fluide de production chaud du fluide de production froid dégazé contenu dans la première conduite de production 1-1, puis le fait remonter dans la deuxième conduite de production 1-2, la vanne V3 étant rouverte. Pour ce faire, la vanne V6 étant rouverte, on injecte du gaz, « dit gas lift », depuis le sommet de la première conduite annexe 2 pour faciliter la remontée du fluide de production s'élevant dans la deuxième conduite de production 1-2.

Concomitamment, on ouvre la vanne V7 et on envoie du produit inhibiteur à savoir du méthanol pour inhiber la formation d'hydrates dans le fluide de production en tête de puits dans la première conduite 1-1.

### Exemple 2 : Deuxième mode de réalisation des figures 2A-2B avec conduite tampon.

Dans ce deuxième mode de réalisation, l'installation comporte les différences et éléments additionnels suivants par rapport à l'installation du premier mode de réalisation.

L'installation comporte tout d'abord, une conduite dite « tampon » la reposant au fond de la mer et qui s'étend depuis l'extrémité inférieure 1-2a de la dite seconde conduite de production 1-2 à laquelle elle est reliée à son extrémité proximale via une vanne V5', la dite conduite tampon étant fermée à son extrémité distale 1a-1. Cette conduite tampon représente un volume sensiblement égal à celui de la deuxième partie de conduite 1-2.

La dite première conduite annexe de transport de gaz 2 comporte à son extrémité inférieure, d'une part la vanne V6 communiquant avec l'extrémité inférieure de la deuxième conduite 1-2 avant la vanne V3 (plus proche de la surface que la vanne V3) et d'autre part une conduite de dérivation 2a. Cette conduite de dérivation 2a de transport de gaz communique avec la conduite tampon la à deux niveaux d'une part au niveau de l'extrémité proximale de la conduite tampon juste après la vanne V5' via une vanne V8' et d'autre part au niveau de l'extrémité distale 1a-1 de la conduite tampon via une vanne V9'.

En revanche, la dite première conduite annexe de transport de gaz 2 ne comporte plus de vanne V5 communiquant avec l'extrémité proximale de la première conduite 1-1 juste en arrière de la vanne V3 comme dans le premier mode de réalisation.

La deuxième conduite annexe 3 de transport de méthanol ou réactif B tel que MEG depuis respectivement les réservoirs 11 ou 12, comporte une deuxième conduite de dérivation 3a qui part d'un point 3-1 avant la vanne V9 jusqu'à une vanne V13 à son extrémité distale débouchant sur un deuxième mélangeur statique 6b. De même, la troisième conduite annexe 4 de transport de réactif A comporte une troisième conduite de dérivation 4a qui part d'un point 4-1 situé juste avant une vanne V16 avant la vanne V9 de la troisième conduite annexe 4. La troisième conduite de dérivation 4a comporte une vanne V17 à son extrémité proximale c'est-à-dire juste après le point de dérivation 4-1 et s'étend jusqu'à une vanne V18 débouchant sur le deuxième mélangeur statique 6b.

Le deuxième mélangeur statique 6b débouche sur un tronçon de conduite formant une deuxième chambre de formation de gel de séparation 5b. Le deuxième mélangeur 6b permet d'alimenter la deuxième chambre 5b en mélange réactionnel des deux réactifs A et B pour former le gel de séparation au sein de la deuxième chambre 5b.

La deuxième chambre 5b communique avec l'extrémité distale de la conduite tampon 2a via une vanne V6'.

Ce gel de séparation sera utile pour permettre la vidange de la conduite tampon tel que décrit ci-après.

La deuxième et la troisième conduites de dérivation 3a et 4a communiquent entre elles via une vanne V14 située avant les vannes V13 et V18 (V14 est donc en position proximale ou plus proche de la surface que V13 et V18).

La troisième conduite annexe 4 comporte une vanne V16 après le point de dérivation 4-1 avant la vanne V9, laquelle vanne V16 ouverte permet l'alimentation en produit réactif A du premier mélangeur 6a.

### A) Phase de production

En phase de production, seules les vannes V0, V1, V2, V3 et V6 sont ouvertes. Toutes les autres vannes sont fermées. On procède comme à l'exemple 1. L'ouverture des vannes V1, V2 et V3 permet au fluide de production (pétrole brut) de remonter en surface via la conduite de liaison fond surface 1. L'ouverture de la vanne V6 permet de faciliter la remontée du fluide de production vers la surface dans la deuxième conduite 1-2 par injection de gaz dans la première conduite annexe 2 depuis la surface.

Les deuxième et troisième conduites annexes 3 et 4 et deuxième et troisième conduites de dérivations 3a et 4a ainsi que les première et deuxième chambres 5a et 5b et premier et deuxième mélangeurs 6a et 6b sont remplis de méthanol.

### B) Arrêt de production

Pour l'arrêt de la production, on ferme les vannes V0, V1 et V6. Puis, on ouvre la vanne V7 et on injecte du méthanol via la deuxième conduite annexe 3 dans la tête de puits 17 et en direction de la vanne V2 jusqu'à remplacement du fluide de production. La vanne V2 est alors fermée.

Puis on ouvre la vanne V0, en surface à l'extrémité supérieure de la deuxième conduite 1-2, pour permettre le dégazage du fluide de production contenu dans les deux première et deuxième conduites de production 1-1 et 1-2, pour réaliser une première dépressurisation des dites conduites 1-1 et 1-2 comme décrit à l'exemple 1.

Dans ce deuxième mode de réalisation, pour préserver au maximum la conduite de liaison fond-surface 1 de toute formation d'hydrates, on vide la deuxième conduite de production 1-2 et on dépressurise plus complètement la première partie de conduite 1-1 par dégazage dans la deuxième partie de conduite vide.

Pour ce faire, on réalise au préalable un drainage ou vidange passive du contenu de la deuxième conduite de production 1-2 dans la conduite tampon 1a, en fermant la vanne V3 et en ouvrant les vannes V5' et V8'. L'ouverture de V8' permet d'évacuer le gaz de la conduite tampon pendant son remplissage via la vanne V5' par le fluide de production de la conduite 1-2.

Une fois la deuxième conduite 1-2 vidée dans la conduite tampon 2a, on ferme les vannes V5' et V8' et on ouvre la vanne V3 pour permettre une évacuation plus importante du gaz résiduel contenu dans le fluide de production au sein de la première conduite 1-1 vers la deuxième conduite vide 1-2 et ainsi effectuer une dépressurisation complémentaire de celle-ci via la deuxième conduite 1-2 vide. Puis, on referme à nouveau V3.

Dans ce deuxième mode de réalisation, on peut ainsi laisser la deuxième conduite de production 1-2 remplie de gaz de production sans la remplir de méthanol. L'ensemble de la conduite de production est alors préservée car à une pression inférieure à la pression de formation d'hydrates à température ambiante.

On notera que - à l'exemple 1- l'on ne pourrait pas vider le fluide de production de la deuxième conduite 1-2 en y envoyant du gaz inerte, possiblement du « gas lift », depuis son sommet et en l'évacuant par la première conduite annexe 2 car cela créerait des risques de formation d'hydrates dans la première conduite annexe 2. En effet la première conduite annexe 2, ou ligne de « gas lift », est en général une ligne de petit diamètre avec une faible inertie thermique et donc un temps de refroidissement disponible court (quelques heures). En faisant passer un fluide de production contenant du gaz et comportant de l'eau dans cette conduite, il est fort probable que la température basse et la pression haute, due au déplacement et à la colonne hydrostatique ainsi créée, causent une formation d'hydrates qui pourrait bloquer rapidement cette ligne de petite section.

### C) Préparation avant le démarrage de la production

Avant de redémarrer la production, on prépare et stocke du gel de séparation dans les première et deuxième chambres 5a et 5b comme suit.

Pour le remplissage de la première chambre, on ouvre les vannes V8, V11 et V16 et on laisse fermées les vannes V7, V9, V17 et V13 et V14. Puis, on alimente le premier mélangeur statique 6a en réactif B, du type MEG par exemple, via la deuxième conduite annexe 3 et en réactif A via la troisième conduite annexe 4 de façon à alimenter en gel de séparation la première chambre 5a comme à l'exemple 1. Au début, le méthanol contenu dans les conduites annexes 3 et 4, ainsi que dans le premier mélangeur 6a et la première chambre 5a est évacué comme à l'exemple 1.

Pour éviter de laisser stagner trop longtemps du réactif A dans la troisième conduite annexe 4, on la remplit de méthanol ainsi que la deuxième conduite annexe 3 comme à l'exemple 1.

Pour le remplissage de la deuxième chambre 5b, V4 et V7 étant fermées par défaut, on ferme les vannes V16, V8 et V9 et on ouvre les vannes V13, V17 et V18. Puis, on alimente le deuxième mélangeur statique 6b en réactif B du type MEG via la deuxième conduite annexe 3 et deuxième conduite de dérivation 3a et en réactif A via la troisième conduite annexe 4 et troisième conduite de dérivation 4a de façon à alimenter en gel de séparation la deuxième chambre 5b. Au début, le méthanol contenu dans les conduites annexes 3 et 4 et conduites de dérivation 3a et 4a, ainsi que dans le deuxième mélangeur 6b et la deuxième chambre 5b est évacué via la vanne V6' ouverte dans la conduite tampon 2a, la vanne V5' ayant été ouverte au préalable. La pression dans les deuxième et troisième conduites annexes 3 et 4 et de dérivation 3a et 4a étant supérieure à celle de l'extrémité distale de conduite tampon 1a-1, le fluide de production ne reflue pas dans la chambre 5b.

Puis, on ferme la vanne V6', quand la chambre 5b est entièrement pleine en mélange réactionnel (A+B) de gel de séparation et on attend que le gel se forme.

Pour éviter de laisser stagner trop longtemps du produit réactif A dans la troisième conduite annexe 4 et la troisième conduite de dérivation 4a, on les remplit de méthanol ainsi que la deuxième conduite annexe 3 et la conduite de dérivation 3a, une fois la chambre 5b remplie de gel. Pour ce faire, on ouvre les vannes V14 et V17, on ferme les vannes V13, V18 et V16, et on envoie du méthanol depuis le réservoir 11 dans la troisième conduite annexe 4 et conduite de dérivation 4a lequel méthanol s'évacue à travers la vanne V14 via la conduite de dérivation 3a vers le sommet de la deuxième conduite annexe 3 (les vannes V8, V13, V17 et V18 étant fermées). Puis, lorsque les dites conduites annexes 3 et 4 et conduites de dérivations 3a et 4a sont pleines de méthanol, on referme la vanne V14. Il est possible également, après évacuation du gel de séparation de la deuxième chambre 5b, de purger le premier mélangeur 6b en gardant la vanne V14 fermée et les vannes V18 et V13 ouvertes pendant le remplacement au méthanol.

Le gel de séparation contenu dans la deuxième chambre 5b va servir à vider la conduite tampon sans risque de formation d'hydrates, avant le redémarrage de la production, en envoyant le gel à l'extrémité distale de la conduite tampon et en l'évacuant au sommet de la deuxième conduite de production 1-2 de la manière suivante.

On ouvre V13 et V6', les vannes V14, V8 et V17 et V18 étant fermées, on envoie du méthanol via les deuxième conduite annexe 3 et deuxième conduite de dérivation 3a lequel méthanol pousse le gel de la chambre 5b dans la conduite tampon 2a.

Puis, on ferme V6' et on ouvre V9', et on envoie du gaz inerte, de préférence du « gas lift », à l'extrémité distale 2a-1 de la conduite tampon 2a, depuis le sommet de la première conduite annexe 2, la vanne V8' étant fermée. Ainsi, le dit gaz pousse le gel et le contenu de la conduite tampon en avant du gel vers la deuxième conduite 1-2 pour l'évacuer à son sommet 1-2b. Une fois la conduite tampon 2a et successivement la deuxième partie de conduite 1-2 vidées de leur contenu liquide, on ferme les vannes V9' et V5'.

On ne pourrait pas vider la conduite tampon via le riser 1-2 sans le gel en utilisant uniquement une injection de gaz dans la conduite tampon car celle-ci étant de large section cela nécessiterait une pression et un débit de gaz irréaliste. Par ailleurs le fluide de production dans la conduite tampon contient du pétrole dégazé et de l'eau à basse température. Le mélanger avec du gaz à haute pression causerait une formation d'hydrate. Le gel étant solide en revanche peut être poussé par le gaz en maintenant une interface et séparation physique compte tenu de ses qualités mécanique et chimique.

En revanche, à l'exemple 1, on peut pousser le liquide du riser 1-2 vers le haut dans la conduite annexe 2 avec du gaz envoyé depuis le haut du riser 1-2 car la conduite annexe 2 de remontée est de plus petit diamètre. Par ailleurs le gaz inerte pousse alors un fluide de remplacement lui-même inhibiteur d'hydrate.

### D) Redémarrage de la production

Pour le redémarrage de la production, on ouvre la vanne V4 et on envoie le gel de séparation depuis la première chambre 5a dans la première conduite de production 1-1 et on procède comme à l'exemple 1.

## Revendications

1. Procédé d'arrêt et redémarrage de la production d'une conduite sous-marine de production de liaison fond-surface (1) comprenant une première partie de conduite (1-1) reposant au fond de la mer (16) depuis une tête de puits (17) jusqu'à l'extrémité inférieure d'une deuxième partie de conduite (1-2) s'élevant jusqu'à un navire ou support flottant (10) en surface, dans lequel procédé, à l'arrêt de la production, au moins la dite première partie de conduite est remplie d'un fluide de production dépressurisé,
**caractérisé en ce que** l'on réalise les étapes de redémarrage suivantes dans lesquelles :
e1) on forme un gel à partir de deux réactifs dans une première chambre (5a) de formation de gel au fond de la mer, la dite première chambre (5a) communiquant avec l'extrémité (1-1a) de la première partie de conduite (1-1) la plus proche de la tête de puits (17), la dite première chambre étant de préférence formée d'un tronçon de conduite *in situ* au fond de la mer dont l'extrémité débouche à proximité de l'extrémité la plus proche de la tête de puits de la première partie de conduite (1-1) reposant au fond de la mer, et
e2) on envoie une quantité de dit gel dans la première partie de conduite (1-1) depuis la dite première chambre (5a) formant un tronçon de gel de séparation poussant le fluide froid contenu dans la première partie de conduite (1-1) vers la deuxième partie de conduite (1-2), avant de fermer la dite première chambre (5a), puis
e3) on démarre la production en envoyant depuis la tête de puits du fluide de production dans la première partie de conduite (1-1) en arrière du dit tronçon de gel de séparation, le dit fluide de production poussant le dit tronçon de gel dans la dite conduite de liaison fond - surface vers son sommet (1-2b), le dit gel formant une séparation physique ainsi qu'une isolation thermique entre d'une part, le fluide de production en arrière du dit tronçon de gel au sein de la première partie de conduite et d'autre part, un fluide dégazé au moins partiellement en avant dudit tronçon de gel au sein de la dite première partie de conduite de production (1-1).

2. Procédé selon la revendication 1, **caractérisé en ce qu'**avant le redémarrage de la production de l'étape e3), avant la mise en communication entre la première partie de conduite de production (1-1) avec la dite deuxième partie de conduite de production (1-2), on vide tout liquide contenu dans la dite deuxième partie de conduite (1-2).

3. Procédé selon l'une des revendications 1 ou 2, **caractérisé en ce qu'**à l'étape e1), on réalise les étapes dans lesquelles :
e1-1) on envoie, de préférence depuis le navire ou support flottant (10) en surface, un premier composé liquide réactif dans une deuxième conduite annexe (3) s'étendant jusque dans un premier mélangeur statique (6a) situé au fond de la mer et débouchant dans la dite première chambre (5a), et
e1-2) en parallèle à e1-1), on envoie, de préférence depuis le navire ou support flottant (10) en surface, un deuxième composé liquide réactif dans une troisième conduite annexe (4) s'étendant jusque dans le dit premier mélangeur statique (6a) situé au fond de la mer et débouchant dans la dite première chambre (5a), et
e1-3) on mélange les deux réactifs au sein du dit mélangeur statique (6a) et on laisse le gel de séparation se former par réaction des deux réactifs en mélange au sein de la dite première chambre (5a).

4. Procédé selon la revendication 3, **caractérisé en ce qu'**après l'étape e1), on remplace les réactifs contenus dans les dites deuxième et troisième conduites annexes (3, 4) par un fluide inerte de remplacement, de préférence du méthanol.

5. Procédé selon la revendication 4, **caractérisé en ce qu'**on remplace les réactifs contenus dans les dites deuxième et troisième conduites annexes (3, 4) par un fluide inerte de remplacement, de préférence du méthanol, en envoyant le dit fluide de remplacement depuis le navire ou support flottant (10) en surface, dans la dite deuxième conduite annexe (3) et en évacuant le contenu de la dite deuxième conduite annexe (3) vers la troisième conduite annexe (4) puis vers le sommet de la troisième conduite annexe au niveau du navire ou support flottant, les deux dites deuxième et troisième conduites annexes (3, 4) étant rendues aptes à communiquer entre elles, de préférence juste avant le dit premier mélangeur.

6. Procédé selon l'une quelconque des revendications 1 à 5, **caractérisé en ce qu'**à l'étape e2), on envoie un fluide inerte de remplacement, tel que du méthanol, depuis le navire ou support flottant (10) en surface, dans une dite deuxième ou troisième conduite annexe (3, 4) qui pousse le dit gel de séparation depuis la dite première chambre (5a) vers la dite première partie de conduite de production (1-1).

7. Procédé selon l'une des revendications 1 à 6, **caractérisé en ce que**, après l'arrêt de la production, on réalise tout d'abord une première dépressurisation de la conduite sous-marine de production de liaison fond-surface (1) entière en laissant une partie seulement du gaz contenu dans le fluide de production contenu dans la dite conduite de production (1) s'évacuer en surface par son extrémité supérieure (1-2b),
**caractérisé en ce qu'**on réalise ensuite les étapes ultérieure suivantes dans lesquelles :
a) on isole la dite première partie de conduite de production (1-1) de la dite deuxième partie de conduite (1-2), et on laisse le fluide de production dans la dite première partie de conduite de production (1-1), et pas dans la dite deuxième partie de conduite (1-2) qui est vidangée, et
b) on réalise une dépressurisation complémentaire de la première partie de conduite de production (1-1) remplie de fluide production, en diminuant la pression dans la dite première partie de conduite (1-1) et en en évacuant plus complètement le gaz contenu dans le fluide de production qu'elle contient.

8. Procédé selon la revendication 7, **caractérisé en ce qu'**on réalise les étapes suivantes :
a1) à l'étape a), après avoir isolé la dite deuxième partie de conduite de la dite première partie de conduite, on remplace le fluide de production au sein de la dite deuxième partie de conduite (1-2) en injectant un fluide inerte de remplacement dans une deuxième conduite annexe (3) s'étendant depuis un premier réservoir (11) sur le navire ou support flottant (10) en surface jusqu'à l'extrémité inférieure (1-2a) de la deuxième partie de conduite (1-2) isolée de la première partie de conduite (1-1), de préférence un fluide inerte comportant ou constituant en outre un produit inhibiteur de la formation d'hydrates ; et
b1) à l'étape b), on réalise une dépressurisation complémentaire de la première partie de conduite de production (1-1) isolée de la dite deuxième partie de conduite (1-2) et remplie de fluide production, en diminuant la pression dans la dite première partie de conduite (1-1) et en évacuant plus complètement le gaz contenu dans le fluide de production qu'elle contient, vers une conduite annexe d'évacuation de gaz (2, 7) s'étendant depuis l'extrémité de la dite première partie de conduite de production (1-1) la plus proche de l'extrémité inférieure (1-2a) de la dite deuxième partie de conduite de production (1-2) jusqu'au navire ou support flottant (10) en surface.

9. Procédé selon la revendication 8, **caractérisé en ce qu'**à l'étape a1), on remplace le fluide de production au sein de la dite deuxième partie de conduite (1-2) en injectant un fluide inerte de remplacement, de préférence un fluide inerte comportant ou constituant en outre un produit inhibiteur de la formation d'hydrates, depuis un premier réservoir (11) sur le navire ou support flottant (10) en surface dans une première conduite annexe de remontée de gaz (2) ou une deuxième conduite annexe (3) s'étendant jusqu'à l'extrémité inférieure (1-2a) de la deuxième partie de conduite (1-2) que l'on isole préalablement de la première partie de conduite (1-1) après dépressurisation de la dite première partie de conduite (1-1), le dit fluide inerte remplaçant et repoussant ainsi le fluide de production vers le navire ou support flottant.

10. Procédé selon la revendication 9, **caractérisé en ce que** avant les étapes de redémarrage de la production de l'étape e3), avant de remettre la première partie de conduite (1-1) reposant au fond de la mer en communication avec la deuxième partie de conduite (1-2) s'élevant en surface et envoyer du fluide production depuis la tête de puits, on vidange la dite deuxième partie de conduite par injection de gaz inerte dans la deuxième partie de conduite depuis le sommet (1-2b) de la deuxième partie de conduite et on évacue le fluide inerte de remplacement de la deuxième partie de conduite vers la surface via une dite première conduite annexe de remontée de gaz (2) qui s'étend depuis l'extrémité inférieure (1-2a) de la dite deuxième partie de conduite à laquelle elle est reliée jusqu'en surface.

11. Procédé selon la revendication 7, **caractérisé en ce qu'**après l'arrêt de la production, on réalise les étapes suivantes dans lesquelles :
a2) à l'étape a), on laisse le fluide de production dans la dite première partie de conduite de production (1-1), et on vidange la dite deuxième partie de conduite (1-2) isolée de la dite première partie de conduite (1-1), en transférant le fluide de production au sein de la dite deuxième partie de conduite (1-2) dans un réservoir tampon relié à l'extrémité inférieure de la dite deuxième partie de conduite, le dit réservoir tampon étant de préférence une conduite tampon (1a) s'étendant au fond de la mer depuis l'extrémité inférieure (1-2a) de la dite deuxième partie de conduite (1-2), et
b2) à l'étape b), on réalise une dépressurisation complémentaire de la première partie de conduite de production (1-1) remplie de fluide de production, en la mettant en communication avec la dite deuxième partie de conduite (1-2) et en évacuant plus complètement le gaz contenu dans le fluide de production de la première partie de conduite vers la dite deuxième partie de conduite de production (1-2) préalablement vidée de tout liquide.

12. Procédé selon la revendication 11, **caractérisé en ce qu'**à l'étape a2), pour transférer le fluide production de la dite deuxième partie de conduite (1-2) vers un réservoir tampon formé par une conduite tampon (1a) s'étendant au fond de la mer depuis l'extrémité inférieure (1-2a) de la dite deuxième partie de conduite (1-2), on évacue concomitamment le gaz contenu dans la conduite tampon via une première conduite annexe de remontée de gaz (2) qui lui est reliée par des vannes (V8', V9') situées d'une part au niveau de son extrémité proximale (1-2a) et d'autre part au niveau de son extrémité distale (1a-1).

13. Procédé selon la revendication 11 ou 12, **caractérisé en ce qu'**avant le redémarrage de la production des étapes e1) à e3), on réalise la vidange dudit réservoir tampon, de préférence de la dite conduite tampon (1a).

14. Procédé selon la revendication 13, **caractérisé en ce que** pour vidanger la conduite tampon (1a), on introduit un gel de séparation au niveau de l'extrémité distale (1a-1) de la conduite tampon et on le pousse par injection de gaz de manière à le déplacer avec le contenu liquide de la conduite tampon vers l'extrémité inférieure (1-2a) de la deuxième partie de conduite (1-2) puis tout le long de celle-ci pour l'évacuer à son sommet (1-2b).

15. Procédé selon la revendication 14, **caractérisé en ce qu'**avant la vidange de la conduite tampon (1a) par introduction d'un gel de séparation, on réalise les étapes suivantes dans lesquelles :
c) on forme un gel à partir de deux réactifs dans une deuxième chambre (5b) de formation de gel au fond de la mer, la dite deuxième chambre (5b) communiquant avec l'extrémité distale (1a-1) de la conduite tampon (1a), la dite deuxième chambre (5b) étant de préférence formée d'un tronçon de conduite *in situ* au fond de la mer dont l'extrémité débouche à proximité de l'extrémité distale (1a-1) de la conduite tampon (1a) reposant au fond de la mer, et
d) on envoie une quantité de dit gel de séparation dans la conduite tampon (1a) depuis la dite deuxième chambre (5b) formant un tronçon de gel de séparation poussant le fluide contenu dans la conduite tampon (1a) jusqu'au sommet de la dite deuxième partie de conduite de production (1-2), avant de fermer la dite deuxième chambre (5b).

16. Procédé selon la revendication 15, **caractérisé en ce que** pour former le gel de séparation à l'étape c), on réalise les étapes dans lesquelles :
c1) on envoie, de préférence depuis le navire ou support flottant (10) en surface, un premier composé liquide réactif dans une dite deuxième conduite annexe (3) puis une deuxième conduite de dérivation (3a) s'étendant jusqu'à un deuxième mélangeur statique (6b) situé au fond de la mer et débouchant dans la dite deuxième chambre (5b), et
c2) on envoie, de préférence depuis le navire ou support flottant (10) en surface, un deuxième composé liquide réactif dans une troisième conduite annexe (4) puis une troisième conduite de dérivation (4a) s'étendant jusqu'au dit deuxième mélangeur statique (6b) situé au fond de la mer et débouchant dans la dite deuxième chambre (5b), et
c3) on mélange les deux réactifs au sein du dit deuxième mélangeur statique (6b) et on laisse le gel de séparation se former par réaction des deux réactifs en mélange au sein de la dite deuxième chambre (5b).

17. Procédé selon la revendication 16, **caractérisé en ce qu'**après l'étape d), on remplace les réactifs contenus dans les dites deuxième et troisième conduites annexes (3,4) et dites deuxième et troisième conduites de dérivation (3a, 4a) par un fluide inerte de remplacement, de préférence du méthanol.

18. Procédé selon la revendication 17, **caractérisé en ce qu'**on remplace les réactifs contenus dans les dites deuxième et troisième conduites annexes (3-3a, 4-4a) et dites deuxième et troisième conduites de dérivation (3a, 4a) par un fluide inerte de remplacement, de préférence du méthanol, en envoyant le dit fluide de remplacement depuis le navire ou support flottant (10) en surface, dans la dite deuxième conduite annexe (3) et en évacuant le contenu de la dite deuxième conduite annexe (3) vers la troisième conduite annexe (4) puis vers le sommet de la troisième conduite annexe au niveau du navire ou support flottant, les deux dites deuxième et troisième conduites annexes (3, 4) étant rendues aptes à communiquer entre elles, de préférence juste avant le dit deuxième mélangeur.

19. Procédé selon l'une quelconque des revendications 15 à 18, **caractérisé en ce qu'**à l'étape d), avant de fermer la dite deuxième chambre (5b), on envoie un fluide inerte tel que du méthanol depuis le navire ou support flottant (10) en surface, dans une dite deuxième ou troisième conduite annexe (3-3a, 4-4a) et dites deuxième ou troisième conduites de dérivations (3a, 4a) qui pousse le dit gel de séparation depuis la dite deuxième chambre (5b) dans la dite conduite tampon avant d'être poussé vers le sommet de la dite deuxième partie de conduite de production (1-2) par injection de gaz à l'extrémité (1a-1) de la conduite tampon.

20. Procédé selon l'une des revendications 16 à 19, **caractérisé en ce qu'**à l'étape d) ou après l'étape d), on réalise la remontée du gel et du liquide dans la dite conduite tampon puis dans la deuxième partie de conduite de production (1-2), en envoyant depuis le navire ou support flottant en surface dans la dite première conduite annexe (2) du gaz inerte débouchant au niveau de l'extrémité distale (1a-1) de la conduite tampon.

21. Installation de production de fluide tel que du pétrole brut utile pour la mise en œuvre d'un procédé selon l'une des revendications 1 à 20, comprenant au moins :
- un navire ou support flottant (10) en surface comprenant au moins trois réservoirs (11, 12, 13), et
- une conduite sous-marine de production de liaison fond-surface (1) comprenant une première partie de conduite (1-1) reposant au fond de la mer (16) depuis une tête de puits (17) jusqu'à l'extrémité inférieure (1-2a) d'une deuxième partie de conduite (1-2) s'élevant jusqu'au navire ou support flottant (10) en surface, et
- une première conduite annexe (2) de transport de gaz s'étendant au moins depuis le navire ou support flottant (10) en surface jusqu'à l'extrémité inférieure (1-2a) de la dite deuxième partie de conduite (1-2), et
- une deuxième conduite annexe (3) s'étendant au moins depuis le premier ou deuxième réservoir (11, 12) contenant un fluide inerte de remplacement ou un premier réactif de gel de séparation, sur le navire ou support flottant (10) en surface jusqu'à un premier mélangeur statique (6a) situé au fond de la mer, la dite deuxième conduite annexe étant apte à transférer le fluide inerte de remplacement ou le premier réactif de gel de séparation, dans le dit premier mélangeur (6a), et
- une troisième conduite annexe (4) s'étendant au moins depuis le troisième réservoir (13) contenant un deuxième réactif de gel de séparation sur le navire ou support flottant (10) en surface jusqu'au premier mélangeur statique (6a), la dite troisième conduite annexe étant apte à transférer le dit deuxième réactif de gel de séparation, dans le dit premier mélangeur, et
- une première chambre (5a) de formation de gel de séparation, de préférence formée d'un tronçon de conduite, située au fond de la mer à une extrémité de laquelle le dit premier mélangeur débouche, la dite première chambre débouche à son autre extrémité à proximité de l'extrémité la plus proche de la tête de puits de la première partie de conduite (1-1) reposant au fond de la mer.

22. Installation selon la revendication 21, **caractérisée en ce qu'**elle comprend une pluralité de vannes comprenant au moins :
- une vanne (V4) apte à isoler ou faire communiquer entre elles la dite première chambre (5a) et l'extrémité de la dite première partie de conduite de production (1-1) la plus poche de la tête de puits, et
- des vannes (V8, V11) aptes à isoler ou faire communiquer la dite deuxième et respectivement dite troisième conduites annexes (3, 4) avec le dit premier mélangeur (6a), et
- de préférence, une vanne (V9) apte à isoler ou faire communiquer entre elles les dites deuxième et troisième conduites annexes (3, 4) juste avant le dit premier mélangeur.

23. Installation selon l'une des revendications 21 ou 22, **caractérisée en ce qu'**elle comprend une pluralité de vannes comprenant au moins :
- une vanne (V6) apte à isoler ou faire communiquer entre elles la dite première conduite annexe (2) de transport de gaz et l'extrémité inférieure (1-2a) de la dite deuxième partie de conduite de production (1-2), et
- une vanne (V3) apte à isoler ou faire communiquer entre elles les dites première partie de conduite de production (1-1) et deuxième partie de conduite de production (1-2) bout à bout.

24. Installation selon l'une quelconque des revendications 22 ou 23, **caractérisée en ce qu'**elle comprend une vanne (V10) apte à isoler ou faire communiquer entre elles la dite deuxième conduite annexe (3) et l'extrémité inférieure de la dite deuxième partie de conduite (1-2).

25. Installation selon l'une des revendications 22 à 24, **caractérisée en ce qu'**elle comprend en outre une vanne (V5) apte à isoler ou faire communiquer entre elles l'extrémité proximale de la dite première partie de conduite de production (1-1) et l'extrémité inférieure soit d'une quatrième conduite annexe (7) remontant directement en surface, soit d'une partie inférieure (2-2) de la dite première conduite annexe (2) reliée via une vanne d'isolation ou communication (V19) à une partie supérieure (2-1) de la dite première conduite annexe (2), la dite première partie (2-1) de la dite première conduite annexe (2) étant reliée à une vanne (V6) apte à isoler ou faire communiquer entre elles la dite première conduite annexe (2) et l'extrémité inférieure (1-2a) de la dite deuxième partie de conduite de production (1-2).

26. Installation selon l'une des revendications 21 à 23, **caractérisée en ce qu'**elle comprend en outre un réservoir tampon relié à l'extrémité inférieure (1-2a) de la dite deuxième partie de conduite (1-2), de préférence le dit réservoir tampon étant une conduite tampon (1a) s'étendant au fond de la mer depuis l'extrémité inférieure (1-2a) de la dite deuxième partie de conduite (1-2).

27. Installation selon la revendication 26, **caractérisée en ce qu'**elle comprend en outre une deuxième chambre (5b) de formation de gel de séparation, de préférence formée d'un tronçon de conduite, située au fond de la mer à une extrémité de laquelle un deuxième mélangeur statique (6b) débouche, la dite deuxième chambre (5b) débouchant à son autre extrémité à proximité de l'extrémité distale (1a-1) de la conduite tampon (1a) reposant au fond de la mer.

28. Installation selon la revendication 27, **caractérisée en ce qu'**elle comprend en outre :
- une première conduite de dérivation (2a) de transport de gaz s'étendant depuis la dite première conduite annexe (2) jusqu'à l'extrémité distale (1a-1) de la conduite tampon,
- une deuxième conduite de dérivation (3a) s'étendant depuis la dite deuxième conduite annexe (3) jusqu'à un deuxième mélangeur statique (6b) situé au fond de la mer et débouchant dans une deuxième chambre (5b), et
- une troisième conduite de dérivation (4a) s'étendant depuis une troisième conduite annexe (4) jusqu'au dit deuxième mélangeur statique (6b) situé au fond de la mer et débouchant dans la dite deuxième chambre (5b), et
- la dite deuxième chambre (5b) débouchant à l'extrémité distale (1a-1) de la conduite tampon (1a).

29. Installation selon l'une des revendications 26 à 28, **caractérisée en ce qu'**elle comprend une pluralité de vannes comprenant au moins :
- une vanne (V5') apte à isoler ou faire communiquer entre elles l'extrémité proximale de la conduite tampon (1a) et l'extrémité inférieure (1-2a) de la dite deuxième partie de conduite de production (1-2), et
- une vanne (V9') apte à isoler ou faire communiquer entre elles l'extrémité distale de la conduite tampon (1a) et l'extrémité distale de la dite première conduite de dérivation (2a) de transport de gaz, et
- de préférence, une vanne (V8') apte à isoler ou faire communiquer l'extrémité distale de la dite première conduite annexe (2) de transport de gaz ou l'extrémité proximale de la dite première conduite de dérivation (2a) de transport de gaz avec l'extrémité proximale de la conduite tampon (1a).

30. Installation selon l'une des revendications 28 ou 29, **caractérisée en ce qu'**elle comprend une pluralité de vannes comprenant au moins :
- des vannes (V13, V18) aptes à isoler ou faire communiquer la dite deuxième et respectivement dite troisième conduites de dérivation (3a, 4a) avec le dit deuxième mélangeur (6b), et
- de préférence, une vanne (V14) apte à isoler ou faire communiquer entre elles les dites deuxième et troisième conduites de dérivation (3a, 4a) juste avant le dit deuxième mélangeur (6b).

## Patentansprüche

1. Verfahren zum Anhalten und Wiederaufnehmen der Arbeit einer Unterwasser-Förderleitung zur Verbindung vom Grund zur Oberfläche (1), umfassend einen ersten Leitungsteil (1-1), der am Meeresgrund (16) ruht, von einem Bohrlochkopf (17) bis zu dem unteren Ende eines zweiten Leitungsteils (1-2), der bis zu einem Schiff oder einem schwimmenden Träger (10) an der Oberfläche aufsteigt, wobei bei dem Verfahren beim Anhalten der Arbeit mindestens der erste Leitungsteil mit einem drucklos gemachten Arbeitsfluid gefüllt wird,
**dadurch gekennzeichnet, dass** die folgenden Schritte zur Wiederaufnahme durchgeführt werden, in welchen:
e1) ein Gel aus zwei Reagenzien in einer ersten Kammer (5a) zur Gelbildung am Meeresgrund gebildet wird, wobei die erste Kammer (5a) mit dem Ende (1-1a) des ersten Leitungsteils (1-1), das dem Bohrlochkopf (17) am nächsten liegt, in Kommunikation steht und die erste Kammer vorzugsweise aus einem Leitungsteilstück *in situ* am Meeresgrund gebildet wird, dessen Ende in der Nähe des Endes des ersten Leitungsteils (1-1) mündet, das dem Bohrlochkopf, der am Meeresgrund ruht, am nächsten liegt, und
e2) eine Menge des Gels in den ersten Leitungsteil (1-1) von der ersten Kammer (5a) aus geschickt wird, die ein Gel-Teilstück zur Trennung bildet, welches das kalte Fluid, das in dem ersten Leitungsteil (1-1) enthalten ist, zu dem zweiten Leitungsteil (1-2) hin schiebt, bevor die erste Kammer (5a) geschlossen wird, anschließend
e3) die Arbeit aufgenommen wird, indem von dem Bohrlochkopf aus Arbeitsfluid in den ersten Leitungsteil (1-1) hinter dem Gel-Teilstück zur Trennung geschickt wird, wobei das Arbeitsfluid das Gel-Teilstück in der Leitung zur Verbindung vom Grund zur Oberfläche zu dessen höchstem Punkt (1-2b) schiebt, wobei das Gel eine physische Trennung sowie eine thermische Isolierung zwischen dem Arbeitsfluid hinter dem Gel-Teilstück innerhalb des ersten Leitungsteils einerseits und einem zumindest teilweise entgasten Fluid vor dem Gel-Teilstück innerhalb des ersten Teils der Förderleitung (1-1) andererseits bildet.

2. Verfahren nach Anspruch 1, **dadurch gekennzeichnet, dass** vor der Wiederaufnahme der Arbeit von Schritt e3) vor der Herstellung der Verbindung zwischen dem ersten Teil der Förderleitung (1-1) und dem zweiten Teil der Förderleitung (1-2) die gesamte Flüssigkeit entleert wird, die in dem zweiten Leitungsteil (1-2) enthalten ist.

3. Verfahren nach einem der Ansprüche 1 oder 2, **dadurch gekennzeichnet, dass** in Schritt e1) die folgenden Schritte durchgeführt werden, in welchen:
e1-1) vorzugsweise von dem Schiff oder schwimmenden Träger (10) an der Oberfläche aus eine erste flüssige reaktive Verbindung in eine zweite angefügte Leitung (3) geschickt wird, der sich bis in einen ersten statischen Mischer (6a) erstreckt, der sich am Meeresgrund befindet und in die erste Kammer (5a) mündet, und
e1-2) parallel zu e1-1), vorzugsweise von dem Schiff oder schwimmenden Träger (10) an der Oberfläche aus, eine zweite reaktive flüssige Verbindung in eine dritte angefügte Leitung (4) geschickt wird, der sich bis in den ersten statischen Mischer (6a) erstreckt, der sich am Meeresgrund befindet und in die erste Kammer (5a) mündet, und
e1-3) die zwei Reagenzien innerhalb des statischen Mischers (6a) gemischt werden und das Gel zur Trennung durch Reaktion der beiden Reagenzien in Mischung innerhalb der ersten Kammer (5a) gebildet wird.

4. Verfahren nach Anspruch 3, **dadurch gekennzeichnet, dass** nach dem Schritt e1) die Reagenzien, die in die zweite und dritte angefügte Leitung (3, 4) enthalten sind, durch ein inertes Ersatzfluid, vorzugsweise Methanol, ersetzt werden.

5. Verfahren nach Anspruch 4, **dadurch gekennzeichnet, dass** die Reagenzien, die in der zweiten und dritten angefügten Leitung (3, 4) enthalten sind, durch ein inertes Ersatzfluid, vorzugsweise Methanol, ersetzt werden, indem das Ersatzfluid von dem Schiff oder schwimmenden Träger (10) an der Oberfläche aus in die zweite angefügte Leitung (3) geschickt wird und indem der Inhalt der zweiten angefügten Leitung (3) zu der dritten angefügten Leitung (4) hin und dann zu dem höchsten Punkt der dritten angefügten Leitung an dem Schiff oder dem schwimmenden Träger abgezogen wird, wobei die zweite und dritte angefügte Leitung (3, 4) beide dazu geeignet gemacht sind, um miteinander in Kommunikation zu stehen, vorzugsweise unmittelbar vor dem ersten Mischer.

6. Verfahren nach einem der Ansprüche 1 bis 5, **dadurch gekennzeichnet, dass** in dem Schritt e2) ein inertes Ersatzfluid, wie etwa Methanol, von dem Schiff oder schwimmenden Träger (10) an der Oberfläche aus in eine von der zweiten oder dritten angefügten Leitung (3, 4) geschickt wird, was das Gel zur Trennung von der ersten Kammer (5a) zu dem ersten Teil der Förderleitung (1-1) hin schiebt.

7. Verfahren nach einem der Ansprüche 1 bis 6, **dadurch gekennzeichnet, dass** nach dem Anhalten der Arbeit zuerst ein erstes Drucklosmachen der gesamten Unterwasser-Förderleitung zur Verbindung vom Grund zur Oberfläche (1) erfolgt, indem nur ein Teil des Gases, das in dem Arbeitsfluid enthalten ist, das in der Förderleitung (1) enthalten ist, durch dessen oberes Ende (1-2b) an die Oberfläche abgezogen wird,
**dadurch gekennzeichnet, dass** anschließend die zuletzt folgenden Schritte durchgeführt werden, in welchen:
a) der erste Teil der Förderleitung (1-1) von dem zweiten Leitungsteil (1-2) isoliert wird, und das Arbeitsfluid in dem ersten Teil der Förderleitung (1-1) belassen wird, und nicht in dem zweiten Leitungsteil (1-2), der entleert wird, und
b) ein komplementäres Drucklosmachen des ersten Teils der Förderleitung (1-1), der mit Arbeitsfluid gefüllt ist, durchgeführt wird, indem der Druck in dem ersten Leitungsteil (1-1) verringert wird und das Gas, das in dem Arbeitsfluid enthalten ist, das dieser enthält, vollständiger daraus abgezogen wird.

8. Verfahren nach Anspruch 7, **dadurch gekennzeichnet, dass** die folgenden Schritte durchgeführt werden:
a1) in Schritt a), nachdem der zweite Leitungsteil von dem ersten Leitungsteil isoliert worden ist Ersetzen des Arbeitsfluids innerhalb des zweiten Leitungsteils (1-2), indem ein inertes Ersatzfluid in eine zweite angefügte Leitung (3) eingespritzt wird, der sich von einem ersten Reservoir (11) auf dem Schiff oder schwimmenden Träger (10) an der Oberfläche bis zu dem unteren Ende (1-2a) des zweiten Leitungsteils (1-2) erstreckt, der von dem ersten Leitungsteil (1-1) isoliert ist, vorzugsweise ein inertes Fluid, das ferner ein Produkt zur Hemmung der Bildung von Hydraten beinhaltet oder darstellt, und
b1) in Schritt b) Durchführen eines komplementären Drucklosmachens des ersten Teils der Förderleitung (1-1), der von dem zweiten Leitungsteil (1-2) isoliert und mit Arbeitsfluid gefüllt ist, indem der Druck in dem ersten Leitungsteil (1-1) verringert wird und indem das Gas, das in dem Arbeitsfluid enthalten ist, das dieser enthält, vollständiger abgezogen wird, zu einer angefügten Leitung zum Abziehen von Gas (2, 7) hin, der sich von dem Ende des ersten Teils der Förderleitung (1-1), der dem unteren Ende (1-2a) des zweiten Teils der Förderleitung (1-2) am nächsten liegt, bis zu dem Schiff oder schwimmenden Träger (10) an der Oberfläche erstreckt.

9. Verfahren nach Anspruch 8, **dadurch gekennzeichnet, dass** in Schritt a1) das Arbeitsfluid innerhalb des zweiten Leitungsteils (1-2) ersetzt wird, indem ein inertes Ersatzfluid, vorzugsweise ein inertes Fluid, das ferner ein Produkt zur Hemmung der Bildung von Hydraten beinhaltet oder darstellt, von einem ersten Reservoir (11) auf dem Schiff oder schwimmenden Träger (10) an der Oberfläche in eine erste angefügte Gas-Hochleitleitung (2) oder eine zweite angefügte Leitung (3) eingespritzt wird, der sich bis zu dem unteren Ende (1- 2a) des zweiten Leitungsteils (1-2) erstreckt, der nach dem Drucklosmachen des ersten Leitungsteils (1-1) vorab von dem ersten Leitungsteil (1-1) isoliert wurde, wobei das inerte Fluid so das Arbeitsfluid ersetzt und zu dem Schiff oder schwimmenden Träger hin verschiebt.

10. Verfahren nach Anspruch 9, **dadurch gekennzeichnet, dass** vor den Schritten zur Wiederaufnahme der Arbeit von Schritt e3), bevor der erste Leitungsteil (1-1), der am Meeresgrund ruht, wieder in Kommunikation mit dem zweiten Leitungsteil (1-2), der sich an die Oberfläche erhebt, versetzt wird und Arbeitsfluid von dem Bohrlochkopf aus geschickt wird, der zweite Leitungsteil durch Einspritzen von Inertgas in den zweiten Leitungsteil von dem höchsten Punkt (1-2b) des zweiten Leitungsteils aus entleert wird und das inerte Ersatzfluid aus dem zweiten Leitungsteil zu der Oberfläche hin über eine erste angefügte Gas-Hochleitleitung (2) abgezogen wird, der sich von dem unteren Ende (1-2a) des zweiten Leitungsteils, mit welchem er verbunden ist, bis zu der Oberfläche erstreckt.

11. Verfahren nach Anspruch 7, **dadurch gekennzeichnet, dass** nach dem Anhalten der Arbeit die folgenden Schritte durchgeführt werden, in welchen:
a2) in Schritt a) das Arbeitsfluid in dem ersten Teil der Förderleitung (1-1) belassen wird und der zweite Leitungsteil (1-2), der von dem ersten Leitungsteil (1-1) isoliert ist, entleert wird, indem das Arbeitsfluid innerhalb des zweiten Leitungsteils (1-2) in ein Pufferreservoir übertragen wird, das mit dem unteren Ende des zweiten Leitungsteils verbunden ist, wobei das Pufferreservoir vorzugsweise eine Pufferleitung (1a) ist, die sich am Meeresgrund von dem unteren Ende (1-2a) des zweiten Leitungsteils (1-2) aus erstreckt, und
b2) in Schritt b) ein komplementäres Drucklosmachen des ersten Teils der Förderleitung (1-1), der mit Arbeitsfluid gefüllt ist, durchgeführt wird, indem er mit dem zweiten Leitungsteil (1-2) in Kommunikation versetzt wird und indem das Gas, das in dem Arbeitsfluid des ersten Leitungsteils enthalten ist, vollständiger zu dem zweiten Teil der Förderleitung (1-2) hin abgezogen wird, aus dem vorher die gesamte Flüssigkeit entleert wurde.

12. Verfahren nach Anspruch 11, **dadurch gekennzeichnet, dass** in dem Schritt a2), um das Arbeitsfluid des zweiten Leitungsteils (1-2) zu einem Pufferreservoir hin zu überführen, das durch eine Pufferleitung (1a) gebildet wird, die sich am Meeresgrund von dem unteren Ende (1- 2a) des zweiten Leitungsteils (1-2) aus erstreckt, gleichzeitig das Gas, das in der Pufferleitung enthalten ist, über eine erste angefügte Gas-Hochleitleitung (2), der mit ihm über Ventile (V8', V9') verbunden ist, die sich an seinem proximalen Ende (1-2a) einerseits und an seinem distalen Ende (1a-1) andererseits befinden, abgezogen wird.

13. Verfahren nach Anspruch 11 oder 12, **dadurch gekennzeichnet, dass** vor der Wiederaufnahme der Arbeit der Schritte e1) bis e3) die Entleerung des Pufferreservoirs, vorzugsweise der Pufferleitung (1a), durchgeführt wird.

14. Verfahren nach Anspruch 13, **dadurch gekennzeichnet, dass** zum Entleeren der Pufferleitung (1a) ein Gel zur Trennung an dem distalen Ende (1a-1) der Pufferleitung eingeleitet wird und dieses durch Einspritzen von Gas auf solche Weise geschoben wird, um es mit dem flüssigen Inhalt der Pufferleitung zu dem unteren Ende (1-2a) des zweiten Leitungsteils (1-2) hin und dann über dessen ganze Länge zu bewegen, um es an seinem höchsten Punkt (1-2b) abzuziehen.

15. Verfahren nach Anspruch 14, **dadurch gekennzeichnet, dass** vor dem Entleeren der Pufferleitung (1a) durch Einleiten eines Gels zur Trennung die folgenden Schritte durchgeführt werden, in welchen:
c) ein Gel aus zwei Reagenzien in einer zweiten Kammer (5b) zur Gelbildung am Meeresgrund gebildet wird, wobei die zweite Kammer (5b) mit dem distalen Ende (1a-1) der Pufferleitung (1a) in Kommunikation steht und die zweite Kammer (5b) vorzugsweise aus einem Leitungsteilstück *in situ* am Meeresgrund gebildet wird, dessen Ende in der Nähe des distalen Endes (1a-1) der Pufferleitung (1a), die am Meeresgrund ruht, mündet, und
d) von der zweiten Kammer (5b) eine Menge des Gels zur Trennung in die Pufferleitung (1a) geschickt wird, die ein Gel-Teilstück zur Trennung bildet, welches das Fluid, das in der Pufferleitung (1a) enthalten ist, bis zu dem höchsten Punkt des zweiten Teils der Förderleitung (1-2) schiebt, bevor die zweite Kammer (5b) geschlossen wird.

16. Verfahren nach Anspruch 15, **dadurch gekennzeichnet, dass** zur Bildung des Gels zur Trennung in dem Schritt c) die Schritte durchgeführt werden, in welchen:
c1) vorzugsweise von dem Schiff oder schwimmenden Träger (10) an der Oberfläche aus eine erste flüssige reaktive Verbindung in eine zweite angefügte Leitung (3) und dann in eine zweite Umleitungsleitung (3a) geschickt wird, die sich bis zu einem zweiten statischen Mischer (6b) erstreckt, der sich am Meeresgrund befindet und in die zweite Kammer (5b) mündet, und
c2) vorzugsweise von dem Schiff oder schwimmenden Träger (10) an der Oberfläche aus eine zweite flüssige reaktive Verbindung in eine dritte angefügte Leitung (4) und dann in eine dritte Umleitungsleitung (4a) geschickt wird, die sich bis zu dem zweiten statischen Mischer (6b) erstreckt, der sich am Meeresgrund befindet und in die zweite Kammer (5b) mündet, und
c3) die zwei Reagenzien innerhalb des zweiten statischen Mischers (6b) gemischt werden und das Gel zur Trennung durch Reaktion der beiden Reagenzien in Mischung innerhalb der zweiten Kammer (5b) gebildet wird.

17. Verfahren nach Anspruch 16, **dadurch gekennzeichnet, dass** nach dem Schritt d) die Reagenzien, die in der zweiten und dritten angefügten Leitung (3, 4) und der zweiten und dritten Umleitungsleitung (3a, 4a) enthalten sind, durch ein inertes Ersatzfluid, vorzugsweise Methanol, ersetzt werden.

18. Verfahren nach Anspruch 17, **dadurch gekennzeichnet, dass** die Reagenzien, die in der zweiten und dritten angefügten Leitung (3-3a, 4-4a) und der zweiten und dritten Umleitungsleitung (3a, 4a) enthalten sind, durch ein inertes Ersatzfluid, vorzugsweise Methanol, ersetzt werden, indem das Ersatzfluid von dem Schiff oder schwimmenden Träger (10) an der Oberfläche aus in die zweite angefügte Leitung (3) geschickt wird und indem der Inhalt der zweiten angefügten Leitung (3) zu der dritten angefügten Leitung (4) hin und dann zu dem höchsten Punkt der dritten angefügten Leitung an dem Schiff oder schwimmenden Träger abgezogen wird, wobei die zweite und dritte angefügte Leitung (3, 4) beide dazu geeignet gemacht sind, um miteinander in Kommunikation zu stehen, vorzugsweise unmittelbar vor dem zweiten Mischer.

19. Verfahren nach einem der Ansprüche 15 bis 18, **dadurch gekennzeichnet, dass** in dem Schritt d) vor dem Schließen der zweiten Kammer (5b) ein inertes Fluid wie etwa Methanol von dem Schiff oder schwimmenden Träger (10) an der Oberfläche aus in einen von der zweiten oder dritten angefügten Leitung (3-3a, 4-4a) und von der zweiten oder dritten Umleitungsleitung (3a, 4a) geschickt wird, was das Gel zur Trennung von der zweiten Kammer (5b) in die Pufferleitung schiebt, bevor es durch Einspritzen von Gas an dem Ende (1a-1) der Pufferleitung zu dem höchsten Punkt des zweiten Teils der Förderleitung (1-2) hin geschoben wird.

20. Verfahren nach einem der Ansprüche 16 bis 19, **dadurch gekennzeichnet, dass** in dem Schritt d) oder nach dem Schritt d) das Hochleiten des Gels und der Flüssigkeit in der Pufferleitung und dann in dem zweiten Teil der Förderleitung (1-2) durchgeführt wird, indem von dem Schiff oder schwimmenden Träger an der Oberfläche aus in die erste angefügte Leitung (2) Inertgas geschickt wird, das an dem distalen Ende (1a-1) der Pufferleitung mündet.

21. Anlage zur Förderung von Fluid wie Rohöl, die zur Umsetzung eines Verfahrens nach einem der Ansprüche 1 bis 20 verwendet werden kann, umfassend zumindest:
- ein Schiff oder einen schwimmenden Träger (10) an der Oberfläche, das/der mindestens drei Reservoirs (11, 12, 13) umfasst, und
- eine Unterwasser-Förderleitung zur Verbindung vom Grund zur Oberfläche (1), umfassend einen ersten Leitungsteil (1-1), der am Meeresgrund (16) ruht, von einem Bohrlochkopf (17) bis zu einem unteren Ende (1-2a) eines zweiten Leitungsteils (1-2), der sich bis zu dem Schiff oder schwimmenden Träger (10) an der Oberfläche erhebt, und
- eine erste angefügte Leitung (2) zum Transport von Gas, die sich zumindest von dem Schiff oder schwimmenden Träger (10) an der Oberfläche aus bis zu dem unteren Ende (1-2a) des zweiten Leitungsteils (1-2) erstreckt, und
- eine zweite angefügte Leitung (3), die sich zumindest von dem ersten oder zweiten Reservoir (11, 12), das ein Ersatzfluid oder ein erstes Reagens für ein Gel zur Trennung enthält, auf dem Schiff oder schwimmenden Träger (10) an der Oberfläche bis zu einem ersten statischen Mischer (6a), der sich am Meeresgrund befindet, erstreckt, wobei die zweite angefügte Leitung dazu geeignet ist, das inerte Ersatzfluid oder das erste Reagens für ein Gel zur Trennung in den ersten Mischer (6a) zu überführen, und
- eine dritte angefügte Leitung (4), die sich zumindest von dem dritten Reservoir (13), das ein zweites Reagens für ein Gel zur Trennung enthält, auf dem Schiff oder schwimmenden Träger (10) an der Oberfläche bis zu dem ersten statischen Mischer (6a) erstreckt, wobei die dritte angefügte Leitung dazu geeignet ist, das zweite Reagens für ein Gel zur Trennung in den ersten Mischer zu überführen, und
- eine erste Kammer (5a) zur Bildung des Gels zur Trennung, die vorzugsweise aus einem Leitungsteilstück gebildet wird, das sich am Meeresgrund befindet, an dessen einem Ende der erste Mischer mündet, wobei die erste Kammer an ihrem anderen Ende in der Nähe des Endes des ersten Leitungsteils (1-1) mündet, das dem Bohrlochkopf, der am Meeresgrund ruht, am nächsten liegt,

22. Anlage nach Anspruch 21, **dadurch gekennzeichnet, dass** sie mehrere Ventile umfasst, die zumindest umfassen:
- ein Ventil (V4), das dazu geeignet ist, die erste Kammer (5a) und das Ende des ersten Teils der Förderleitung (1-1), das dem Bohrlochkopf am nächsten liegt, voneinander zu isolieren oder miteinander kommunizieren zu lassen, und
- Ventile (V8, V11), die dazu geeignet sind, die zweite und dritte angefügte Leitung (3, 4) jeweils von dem ersten Mischer (6a) zu isolieren oder damit kommunizieren zu lassen, und
- vorzugsweise ein Ventil (V9), das dazu geeignet ist, die zweite und dritte angefügte Leitung (3, 4) unmittelbar vor dem ersten Mischer voneinander zu isolieren oder miteinander kommunizieren zu lassen.

23. Anlage nach einem der Ansprüche 21 oder 22, **dadurch gekennzeichnet, dass** sie mehrere Ventile umfasst, die zumindest umfassen:
- ein Ventil (V6), das dazu geeignet ist, die erste angefügte Leitung (2) zum Transport von Gas und das untere Ende (1-2a) des zweiten Teils der Förderleitung (1-2) voneinander zu isolieren oder miteinander kommunizieren zu lassen, und
- ein Ventil (V3), das dazu geeignet ist, den ersten Teil der Förderleitung (1-1) und den zweiten Teil der Förderleitung (1-2) Stoß an Stoß voneinander zu isolieren oder miteinander kommunizieren zu lassen.

24. Anlage nach einem der Ansprüche 22 oder 23, **dadurch gekennzeichnet, dass** sie ein Ventil (V10) umfasst, das dazu geeignet ist, die zweite angefügte Leitung (3) und das untere Ende des zweiten Leitungsteils (1-2) voneinander zu isolieren oder miteinander kommunizieren zu lassen.

25. Anlage nach einem der Ansprüche 22 bis 24, **dadurch gekennzeichnet, dass** sie ferner ein Ventil (V5) umfasst, dass dazu geeignet ist, das proximale Ende des ersten Teils der Förderleitung (1-1) und das untere Ende entweder einer vierten angefügten Leitung (7), die direkt zur Oberfläche aufsteigt, oder eines unteren Teils (2-2) der ersten angefügten Leitung (2), die über ein Ventil zur Isolierung oder Kommunikation (V19) mit einem oberen Teil (2-1) der ersten angefügten Leitung (2) verbunden ist, voneinander zu isolieren oder miteinander kommunizieren zu lassen, wobei der erste Teil (2-1) der ersten angefügten Leitung (2) mit einem Ventil (V6) verbunden ist, das dazu geeignet ist, die erste angefügte Leitung (2) und das untere Ende (1-2a) des zweiten Teils der Förderleitung (1-2) voneinander zu isolieren oder miteinander kommunizieren zu lassen.

26. Anlage nach einem der Ansprüche 21 bis 23, **dadurch gekennzeichnet, dass** sie ferner ein Pufferreservoir umfasst, das mit dem unteren Ende (1-2a) des zweiten Leitungsteils (1-2) verbunden ist, wobei das Pufferreservoir vorzugsweise eine Pufferleitung (1a) ist, die sich am Meeresgrund von dem unteren Ende (1-2a) des zweiten Leitungsteils (1-2) aus erstreckt.

27. Anlage nach Anspruch 26, **dadurch gekennzeichnet, dass** sie ferner eine zweite Kammer (5b) zur Bildung eines Gels zur Trennung umfasst, die vorzugsweise durch ein Leitungsteilstück gebildet wird, das sich am Meeresgrund befindet, an dessen einem Ende ein zweiter statischer Mischer (6b) mündet, wobei die zweite Kammer (5b) an ihrem anderen Ende in der Nähe des distalen Endes (1a-1) der Pufferleitung (1a) mündet, die am Meeresgrund ruht.

28. Anlage nach Anspruch 27, **dadurch gekennzeichnet, dass** sie ferner umfasst:
- eine erste Umleitungsleitung (2a) zum Transport von Gas, die sich von der ersten angefügten Leitung (2) bis zu dem distalen Ende (1a-1) der Pufferleitung erstreckt,
- eine zweite Umleitungsleitung (3a), die sich von der zweiten angefügten Leitung (3) bis zu einem zweiten statischen Mischer (6b) erstreckt, der sich am Meeresgrund befindet und in eine zweite Kammer (5b) mündet, und
- eine dritte Umleitungsleitung (4a), die sich von einer dritten angefügten Leitung (4) bis zu dem zweiten statischen Mischer (6b) erstreckt, der sich am Meeresgrund befindet und in die zweite Kammer (5b) mündet, und
- wobei die zweite Kammer (5b) an dem distalen Ende (1a-1) der Pufferleitung (1a) mündet.

29. Anlage nach einem der Ansprüche 26 oder 28, **dadurch gekennzeichnet, dass** sie mehrere Ventile umfasst, die zumindest umfassen:
- ein Ventil (V5'), das dazu geeignet ist, das proximale Ende der Pufferleitung (1a) und das untere Ende (1-2a) des zweiten Teils der Förderleitung (1-2) voneinander zu isolieren oder miteinander kommunizieren zu lassen, und
- ein Ventil (V9'), das dazu geeignet ist, das distale Ende der Pufferleitung (1a) und das distale Ende der ersten Umleitungsleitung (2a) zum Transport von Gas voneinander zu isolieren oder miteinander kommunizieren zu lassen, und
- vorzugsweise ein Ventil (V8'), das dazu geeignet ist, das distale Ende der ersten angefügten Leitung (2) zum Transport von Gas oder das proximale Ende der ersten Umleitungsleitung (2a) zum Transport von Gas und das proximale Ende der Pufferleitung (1a) voneinander zu isolieren oder miteinander kommunizieren zu lassen.

30. Anlage nach einem der Ansprüche 28 oder 29, **dadurch gekennzeichnet, dass** sie mehrere Ventile umfasst, die zumindest umfassen:
- Ventile (V13, V18), die dazu geeignet sind, die zweite und dritte Umleitungsleitung (3a, 4a) jeweils von dem zweiten Mischer (6b) zu isolieren oder damit kommunizieren zu lassen, und
- vorzugsweise ein Ventil (V14), das dazu geeignet ist, die zweite und dritte Umleitungsleitung (3a, 4a) unmittelbar vor dem zweiten Mischer (6b) voneinander zu isolieren oder miteinander kommunizieren zu lassen.

## Claims

1. A method of stopping and restarting production in an undersea bottom-to-surface connection production pipe (1) comprising a first pipe portion (1-1) resting on the sea bottom (16) from a well head (17) to the bottom end of a second pipe portion (1-2) going up to a ship or floating support (10) on the surface, in which method, when production is stopped, at least said first pipe portion is filled with a depressurized production fluid, the method being **characterized in that** the following restarting steps are performed:
e1) forming a gel from two reagents in a first gel-forming chamber (5a) on the sea bottom, said first chamber (5a) communicating with the end (1-1a) of the first pipe portion (1-1) that is closest to the well head (17), said first chamber preferably being formed by a pipe segment in situ on the sea bottom, having its end leading to the proximity of the end of the first pipe portion (1-1) resting on the sea bottom that is closest to the well head; and
e2) sending a quantity of said gel into the first pipe portion (1-1) from said first chamber (5a) forming a separator gel segment that pushes the cold fluid contained in the first pipe portion (1-1) to the second pipe portion (1-2), prior to closing said first chamber (5a); and then
e3) starting production by sending said production fluid from the production fluid well into the first pipe portion (1-1) behind said separator gel segment, said production fluid pushing said gel segment into said bottom-to-surface connection pipe towards its top (1-2b), said gel forming a physical separation and also thermal isolation between firstly the production fluid behind said gel segment within the first pipe portion and secondly a fluid that has been at least partially degassed ahead of said gel segment within said first production pipe portion (1-1).

2. A method according to claim 1, **characterized in that** prior to restarting production in step e3), and prior to putting the first production pipe portion (1-1) into communication with said second production pipe portion (1-2), all of the liquid contained in said second pipe portion (1-2) is emptied out.

3. A method according to claim 1 or claim 2, **characterized in that** in step e1), the following steps are performed:
e1-1) sending, preferably from the ship or floating support (10) on the surface, a first liquid reagent compound into a second auxiliary pipe (3) extending to a first static mixer (6a) situated on the sea bottom and leading into said first chamber (5a); and
e1-2) in parallel with e1-1), sending, preferably from the ship or floating support (10) on the surface, a second liquid reagent compound in a third auxiliary pipe (4) extending to said first static mixer (6a) situated on the sea bottom and leading into said first chamber (5a); and
e1-3) mixing the two reagents within said static mixer (6a) and allowing the separator gel to form by reaction between the mixture of two reagents within said first chamber (5a).

4. A method according to claim 3, **characterized in that** after step e1), the reagents contained in said second and third auxiliary pipes (3, 4) are replaced by an inert replacement fluid, preferably methanol.

5. A method according to claim 4, **characterized in that** the reagents contained in said second and third auxiliary pipes (3, 4) are replaced by an inert replacement fluid, preferably methanol, by sending said replacement fluid from the ship or floating support (10) on the surface into said second auxiliary pipe (3) and by discharging the content of said second auxiliary pipe (3) to the third auxiliary pipe (4) and then to the top of the third auxiliary pipe at the ship or floating support, said second and third auxiliary pipes (3, 4) being made suitable for communicating with each other, preferably immediately ahead of said first mixer.

6. A method according to any one of claims 1 to 5, **characterized in that** in step e2), an inert replacement fluid such as methanol is sent from the ship or floating support (10) on the surface in a said second or third auxiliary pipe (3, 4), thereby pushing said separator gel from said first chamber (5a) towards said first production pipe portion (1-1).

7. A method according to any one of claims 1 to 6, **characterized in that**, after stopping production, first depressurization of the entire bottom-to-top connection production undersea pipe (1) is performed allowing a portion only of the gas contained in the production fluid contained in said production pipe (1) to be discharged on the surface via its top end (1-2b), the method being **characterized in that** the following subsequent steps are then performed:
a) isolating said first production pipe portion (1-1) from said second pipe portion (1-2), and leaving the production fluid in said first production pipe portion (1-1), but not in said second pipe portion (1-2), which is emptied; and
b) additionally depressurizing the first production pipe portion (1-1) filled with production fluid by reducing the pressure in said first pipe portion (1-1) and by discharging more completely the gas contained in the production fluid that it contains.

8. A method according to claim 7, **characterized in that** the following steps are performed:
a1) in step a), after isolating said second pipe portion from said first pipe portion, replacing the production fluid within said second pipe portion (1-2) by injecting an inert replacement fluid into a second auxiliary pipe (3) extending from a first tank (11) on the ship or floating support (10) on the surface to the bottom end (1-2a) of the second pipe portion (1-2) isolated from the first pipe portion (1-1), preferably an inert fluid also including or constituting a hydrate formation inhibitor; and
b1) in step b), performing additional depressurization of the first production pipe portion (1-1) isolated from said second pipe portion (1-2) and filled with production fluid, by reducing the pressure in said first pipe portion (1-1) and more completely discharging the gas contained in the production fluid it contains, to an auxiliary gas discharge pipe (2, 7) extending from the end of said first production pipe portion (1-1) closest to the bottom end (1-2a) of said second production pipe portion (1-2) to the ship or floating support (10) on the surface.

9. A method according to claim 8, **characterized in that** in step a1), the production fluid within said second pipe portion (1-2) is replaced by injecting an inert replacement fluid, preferably an inert fluid also including or constituting a hydrate formation inhibitor, from a first tank (11) on the ship or floating support (10) on the surface into a first auxiliary gas riser pipe (2) or a second auxiliary pipe (3) extending to the bottom end (1-2a) of the second pipe portion (1-2) that is previoulsly isolated from the first pipe portion (1-1) after depressurizing said first pipe portion (1-1), said inert fluid thus replacing and pushing the production fluid back towards the ship or floating support.

10. A method according to claim 9, **characterized in that** before the steps of restarting production in step e3), before putting the first pipe portion (1-1) resting on the sea bottom into communication with the second pipe portion (1-2) rising to the surface and sending the production fluid from the well head, said second pipe portion is emptied by injecting inert gas into the second pipe portion from the top (1-2b) of the second pipe portion and discharging the inert replacement fluid from the second pipe portion to the surface via a first auxiliary gas riser pipe (2) that extends up to the surface from the bottom end (1-2a) of said second pipe portion to which it is connected.

11. A method according to claim 7, **characterized in that** after stopping production, the following steps are performed:
a2) in step a), leaving the production fluid in said first production pipe portion (1-1), and emptying said second pipe portion (1-2) isolated from said first pipe portion (1-1) by transferring the production fluid within said second pipe portion (1-2) into a buffer tank connected to the bottom end of said second pipe portion, said buffer tank preferably being a buffer pipe (1a) extending on the sea bottom from the bottom end (1-2a) of the said second pipe portion (1-2); and
b2) in step b), performing additional depressurization of the first production pipe portion (1-1) filled with production fluid by putting it into communication with said second pipe portion (1-2) and by more completely discharging the gases contained in the production fluid of the first pipe portion towards said second production pipe portion (1-2) that has previously been emptied of all liquid.

12. A method according to claim 11, **characterized in that** in step a2), in order to transfer the production fluid from said second pipe portion (1-2) to a buffer tank formed by a buffer pipe (1a) extending on the sea bottom from the bottom end (1-2a) of said second pipe portion (1-2), the gas contained in the buffer pipe is simultaneously discharged via a first auxiliary gas riser pipe (2) that is connected thereto via respective valves (V8', V9') situated firstly at its proximal end (1-2a) and secondly at its distal end (1a-1).

13. A method according to claim 11 or claim 12, **characterized in that** before restarting production in steps e1) to e3), said buffer tank, preferably said buffer pipe (1a), is emptied.

14. A method according to claim 13, **characterized in that** in order to empty the buffer pipe (1a), a separator gel is inserted at the distal end (1a-1) of the buffer pipe and is pushed by injecting gas so as to cause it to move together with the liquid content of the buffer pipe towards the bottom end (1-2a) of the second pipe portion (1-2), and then all along the second pipe portion in order to be evacuated at the top (1-2b) thereof.

15. A method according to claim 14, **characterized in that** before emptying the buffer pipe (1a) by introducing a separator gel, the following steps are performed:
c) forming a gel from two reagents in a second gel-forming chamber (5b) on the sea bottom, said second chamber (5b) communicating with the distal end (1a-1) of the buffer pipe (1a), said second chamber (5b) preferably being formed by an in situ pipe segment on the sea bottom having its end leading to the proximity of the distal end (1a-1) of the buffer pipe (1a) resting on the sea bottom; and
d) sending a quantity of said separator gel into the buffer pipe (1a) from said second chamber (5b) and forming a separator gel segment pushing the fluid contained in the buffer pipe (1a) to the top of said second production pipe portion (1-2), prior to closing said second chamber (5b).

16. A method according to claim 15, **characterized in that** in order to form the separator gel in step c), the following steps are performed:
- c1 sending, preferably from the ship or floating support (10) on the surface, a first reagent liquid compound in a said second auxiliary pipe (3) and then a second branch connection pipe (3a) extending to a second static mixer (6b) situated at the sea bottom and leading to said second chamber (5b); and
c2) ending, preferably from the ship or floating support (10) on the surface, a second reagent liquid compound in a third auxiliary pipe (4) and then a third branch connection pipe (4a) extending to said second static mixer (6b) situated on the sea bottom and leading to said second chamber (5b); and
c3) mixing the two reagents within said second static mixer (6b) and allowing the separator gel to form by reaction between the mixture of two reagents within said second chamber (5b).

17. A method according to claim 16, **characterized in that** after step d), the reagents contained in said second and third auxiliary pipes (3, 4) and said second and third branch connection pipes (3a, 4a) are replaced by an inert replacement fluid, preferably methanol.

18. A method according to claim 17, **characterized in that** the reagents contained in said second and third auxiliary pipes (3-3a, 4-4a) and said second and third branch connection pipes (3a, 4a) are replaced by an inert replacement fluid, preferably methanol, by sending said replacement fluid from the ship or floating support (10) on the surface into said second auxiliary pipe (3) and discharging the content of said second auxiliary pipe (3) to the third auxiliary pipe (4) and then to the top of the third auxiliary pipe at the ship or floating support, said second and third auxiliary pipes (3, 4) being made suitable for communicating with each other, preferably immediately ahead of said second mixer.

19. A method according to any one of claims 15 to 18, **characterized in that** in step d), before closing said second chamber (5b), an inert fluid such as methanol is sent from the ship or floating support (10) on the surface into a said second or third auxiliary pipe (3-3a, 4-4a) and said second or third branch connection pipes (3a, 4a), thereby pushing said separator gel from said second chamber (5b) into said buffer pipe prior to pushing it to the top of said second production pipe portion (1-2) by injecting gas into the end (1a-1) of the buffer pipe.

20. A method according to any one of claims 16 to 19, **characterized in that** in step d), or after step d), the gel and the liquid in said buffer pipe and then in the second production pipe portion (1-2) is raised by sending inert gas from the ship or floating support on the surface into said first auxiliary pipe (2) leading to the distal end (1a-1) of the buffer pipe.

21. An installation for producing fluid such as crude oil and suitable for performing the method according to any one of claims 1 to 20, the installation comprising at least:
- a ship or floating support (10) on the surface having at least three tanks (11, 12, 13); and
- an undersea bottom-to-surface connection production pipe (1) comprising a first pipe portion (1-1) resting on the sea bottom (16) from a well head (17) to the bottom end (1-2a) of a second pipe portion (1-2) rising to the ship or floating support (10) on the surface; and
- a first auxiliary pipe (2) for transporting gas extending at least from the ship or floating support (10) on the surface to the bottom end (1-2a) of said second pipe portion (1-2); and
- a second auxiliary pipe (3) extending at least from the first or second tank (11, 12) containing an inert replacement fluid or a first separator gel reagent on board the ship or floating support (10) on the surface to a first static mixer (6a) located on the bottom of the sea, said second auxiliary pipe being suitable for transferring the inert replacement fluid or the first separator gel reagent into said first mixer (6a); and
- a third auxiliary pipe (4) extending at least from the third tank (13) containing a second separator gel reagent on board the ship or floating support (10) on the surface to the first static mixer (6a), said third auxiliary pipe being suitable for transferring said second separator gel reagent into said first mixer; and
- a first separatorgel-forming chamber (5a), preferably formed by a pipe segment situated on the sea bottom at an end to which said first mixer leads, said first chamber leading at its other end to the proximity of the end of the first pipe portion (1-1) resting on the sea bottom that is closest to the well head.

22. An installation according to claim 21, **characterized in that** it has a plurality of valves, comprising at least:
- respective valves (V4) suitable for isolating or putting into communication said first chamber (5a) and the end of said first production pipe portion (1-1) that is closest to the well head; and
- respective valves (V8, V11) suitable for isolating or putting into communication said second and third auxiliary pipes (3, 4) with said first mixer (6a); and
- preferably a valve (V9) suitable for isolating or putting into communication said second and third auxiliary pipes (3, 4) immediately ahead of said first mixer.

23. An installation according to claim 21 or claim 22, **characterized in that** it has a plurality of valves comprising at least:
- a valve (V6) suitable for isolating or putting into communication said first auxiliary pipe (2) for transporting gas and the bottom end (1-2a) of said second production pipe portion (1-2); and
- a valve (V3) suitable for isolating or putting into communication said first production pipe portion (1-1) and said second production pipe portion (1-2), end to end.

24. An installation according to claim 22 or claim 23, **characterized in that** it has a valve (V10) suitable for isolating or putting into communication said second auxiliary pipe (3) and the bottom end of said second pipe portion (1-2).

25. An installation according to any one of claims 21 to 24, **characterized in that** it further has a valve (V5) suitable for isolating or putting into communication the proximal end of said first production pipe portion (1-1) and the bottom end either of a fourth auxiliary pipe (7) rising directly to the surface, or else a bottom portion (2-2) of said first auxiliary pipe (2) connected via an isolating or communicating valve (V19) to a top portion (2-1) of said first auxiliary pipe (2), said first portion (2-1) of said first auxiliary pipe (2) being connected to a valve (V6) suitable for isolating or putting into communication said first auxiliary pipe (2) and the bottom end (1-2a) of said second production pipe portion (1-2).

26. An installation according to any one of claims 21 to 23, **characterized in that** it further comprises a buffer tank connected to the bottom end (1-2a) of said second pipe portion (1-2), said buffer tank preferably being a buffer pipe (1a) extending on the sea bottom from the bottom end (1-2a) of said second pipe portion (1-2).

27. An installation according to claim 26, **characterized in that** it further comprises a second separatorgel-forming chamber (5b), preferably formed by a segment of pipe situated on the sea bottom to one end of which a second static mixer (6b) leads, said second chamber (5b) leading at its other end to the proximity of the distal end (1a-1) of the buffer pipe (1a) resting on the sea bottom.

28. An installation according to claim 27, **characterized in that** it further comprises:
- a first branch connection pipe (2a) for transporting gas extending from said first auxiliary pipe (2) to the distal end (1a-1) of the buffer pipe;
- a second branch connection pipe (3a) extending from said second auxiliary pipe (3) to a second static mixer (6b) situated on the sea bottom and leading to a second chamber (5b); and
- a third branch connection pipe (4a) extending from a third auxiliary pipe (4) to said second static mixer (6b) situated on the sea bottom and leading to said second chamber (5b); and
- said second chamber (5b) leading to the distal end (1a-1) of the buffer pipe (1a).

29. An installation according to any one of claims 26 to 28, **characterized in that** it has a plurality of valves comprising at least:
- a valve (V5') suitable for isolating or putting into communication the proximal end of the buffer pipe (1a) and the bottom end (1-2a) of said production pipe portion (1-2); and
- a valve (V9') suitable for isolating or putting into communication the distal end of the buffer pipe (1a) and the distal end of said first branch connection pipe (2a) for transporting gas; and
- preferably, a valve (V8') suitable for isolating or putting into communication the distal end of said first auxiliary pipe (2) for transporting gas or the proximal end of said first branch connection pipe (2a) for transporting gas with the proximal end of the buffer pipe (1a).

30. An installation according to claim 28 or claim 29, **characterized in that** it has a plurality of valves, comprising at least:
- valves (V13, V18) suitable for isolating or putting into communication said second and third branch connection pipes (3a, 4a) respectively with said second mixer (6b); and
- preferably, a valve (V14) suitable for isolating or putting into communication said second and third branch connection pipes (3a, 4a) immediately ahead of said second mixer (6b).
